Europäisches Patentamt

European Patent Office

Office européen des brevets

(19)

(11)  **EP 0 680 223 B1**

(12)  # EUROPEAN PATENT SPECIFICATION

(45) Date of publication and mention
of the grant of the patent:
**27.01.1999  Bulletin 1999/04**

(51) Int Cl.⁶: **H04N 9/64**, H04N 9/67

(21) Application number: **94302888.6**

(22) Date of filing: **22.04.1994**

(54) **Method and apparatus using color look-up tables for color space conversion**

Verfahren und Vorrichtung zur Farbraumumwandlung unter Verwendung von Farbwerttabellen

Méthode et appareil utilisant des tables de correspondance de couleurs pour la conversion d' espaces de couleurs

(84) Designated Contracting States:
**AT BE CH DE DK ES FR GB GR IE IT LI LU MC NL PT SE**

(43) Date of publication of application:
**02.11.1995  Bulletin 1995/44**

(73) Proprietor: **WINBOND ELECTRONICS CORPORATION**
**Hsinchu City (TW)**

(72) Inventor: **Shyu, Rong-Fuh**
**Hsinchu City (TW)**

(74) Representative: **Barlow, Roy James**
**J.A. KEMP & CO.**
**14, South Square**
**Gray's Inn**
**London WC1R 5LX (GB)**

(56) References cited:
**EP-A- 0 555 835**          **CA-A- 2 045 908**
**DE-A- 3 842 797**          **FR-A- 2 527 881**
**US-A- 5 124 688**

## Description

This invention relates to a method and apparatus for performing color space conversion, more particularly to a method and apparatus for performing color space conversion between digitized YCbCr color components and digitized RGB color components.

Nowadays, due to the growing popularity of multimedia applications, the development of advanced data processing techniques for digital audio data and digital video data has become more and more important. It is noted that, due to the limited bandwidth of the transmission networks and the limited storage spaces of the existing computer systems, digital video data have to be compressed before transmission or storage. Thereafter, the compressed data are decompressed so as to obtain the original digital video data from the storage or transmission media.

Presently, digitized YCbCr components, wherein the Y component represents luminance or picture brightness, the Cb component (B-Y) represents the scaled difference between the blue value (B) and the luminance (Y), and the Cr component (R-Y) represents the scaled difference between the red value (R) and the luminance (Y), are used in known compression algorithms since the digitized YCbCr components occupy less bandwidth when compared to digitized RGB (Red-Green-Blue) components which are obtained by passing analog RGB signals through an analog-to-digital converting means. However, the existing imaging and displaying apparatuses generally use analog RGB signals to represent image. Therefore, the analog RGB signals must initially pass through an analog-to-digital converting means and are then converted into digitized YCbCr components before compression. The digitized YCbCr components are converted into the digitized RGB components after decompression. If necessary, the digitized RGB components are converted into analog RGB signals.

Although there are many conventional techniques for color space conversion, the architecture of the conventional techniques permits conversion in only one mode, that is, either converting YCbCr components to RGB components or converting RGB components to YCbCr components. Additionally, the conventional techniques are expensive due to the large memory requirements thereof. Furthermore, the conventional techniques that use multipliers are relatively expensive and have a relatively slow operating speed.

Therefore, the main object of the present invention is to provide a method and apparatus for performing color space conversion between digitized YCbCr color components and digitized RGB color components, which method and apparatus are inexpensive and are highly efficient.

The present invention provides a method and apparatus capable of performing color space conversion between digitized YCbCr color components, and digitized RGB color components as defined in claims 1, 9, 11 and 14.

Other features and advantages of the present invention will become apparent in the following detailed description of the preferred embodiments, with reference to the accompanying drawings, of which:

Figs. 1A, 1B and 1C are schematic block diagrams showing an apparatus for performing color space conversion between digitized YCbCr color components and digitized RGB color components in accordance with a first embodiment of the present invention;

Fig. 2 is a schematic block diagram showing a first complement means and an address decoder of the apparatus of Fig. 1;

Fig. 3 is a schematic block diagram illustrating one of the polarity control means shown in Fig. 1;

Fig. 4 is a schematic block diagram of an apparatus for converting digitized YCbCr components to digitized RGB components in accordance with a second embodiment of the present invention;

Fig. 5 is a schematic block diagram showing how a programmable color lookup table means of the apparatus shown in Fig. 1 is programmed;

Fig. 6 is a table illustrating an address decoding method employed in the present invention; and

Fig. 7 illustrates the operation of a programming control circuit upon input of differing combinations of selecting signals, which programming control circuit is used to program the programmable color lookup table means of the apparatus shown in Fig. 1.

In the present invention, each of the digitized Y, Cb and Cr components and each of the digitized R, G and B components is an 8-bit component. Direct conversion of digitized RGB components to digitized YCbCr components is achieved in the following manner:

$$\begin{vmatrix} Y \\ Cb \\ Cr \end{vmatrix} = \begin{vmatrix} 0.229 & 0.587 & 0.114 \\ -0.173 & -0.338 & 0.511 \\ 0.511 & -0.428 & -0.083 \end{vmatrix} \begin{vmatrix} R-128 \\ G-128 \\ B-128 \end{vmatrix} + \begin{vmatrix} 128 \\ 128 \\ 128 \end{vmatrix} \qquad (a)$$

Direct conversion of digitized YCbCr components to RGB components is achieved in the following manner:

$$\begin{vmatrix} R \\ G \\ B \end{vmatrix} = \begin{vmatrix} 1 & -0.001 & 1.370 \\ 1 & -0.336 & -0.698 \\ 1 & 1.733 & 0.001 \end{vmatrix} \begin{vmatrix} Y-128 \\ Cb-128 \\ Cr-128 \end{vmatrix} + \begin{vmatrix} 128 \\ 128 \\ 128 \end{vmatrix} \quad (b)$$

The above conversions (a) and (b) can be represented by the following equation:

$$POn = \sum_{m=1}^{3} Cnm(PIm-128)+128, \quad n=1,2,3 \quad (c)$$

In the equation (c), PIm is defined as a color component of an original space, POn is defined as a color component of a converted space, and Cnm is defined as a transformation coefficient corresponding to an nth color component of the converted space relative to an mth color component of the original space, and the product of Cnm and PIm-128 is defined as a transformation component value corresponding to a PIm-in-POn component. Therefore, in the present embodiment, when PO1, PO2 and PO3 represent Y, Cb and Cr components respectively, PI1, PI2 and PI3 represent R, G and B components respectively. Similarly, when PO1, PO2 and PO3 represent R, G and B components respectively, PI1, PI2 and PI3 represent Y, Cb and Cr components respectively.

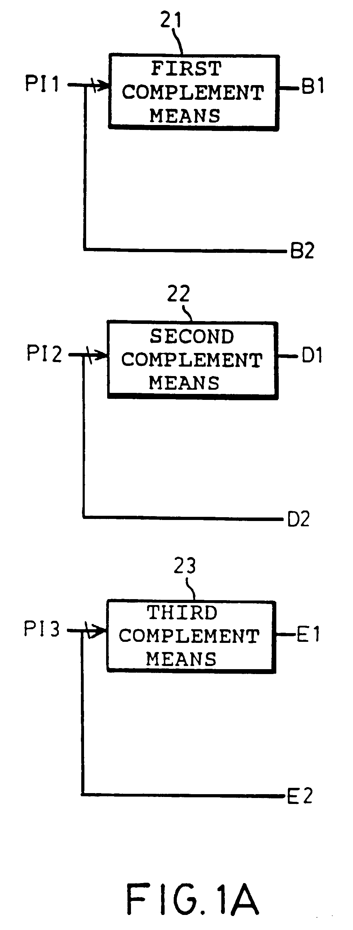

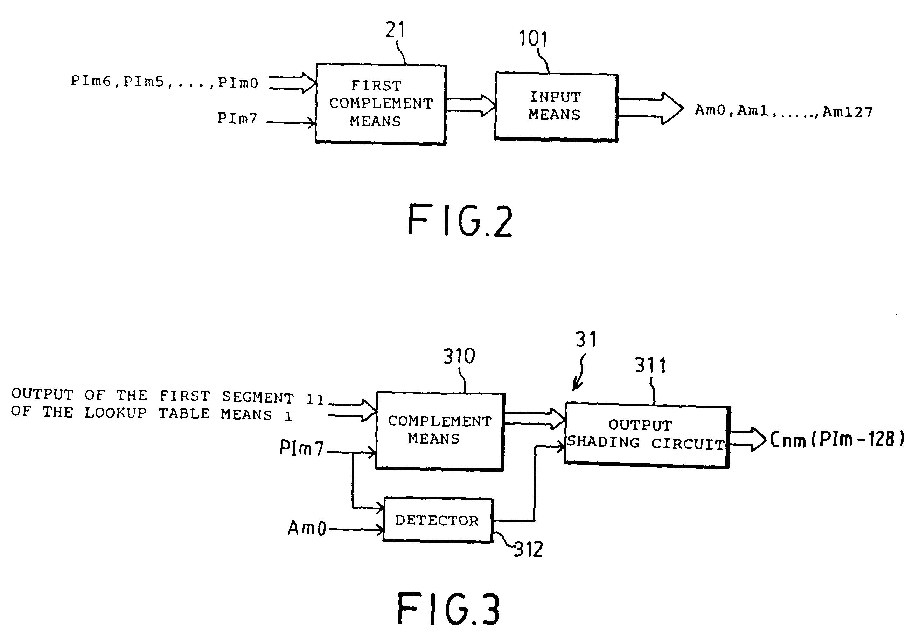

Referring to Figs. 1A, 1B, 1C, 2 and 3, an apparatus for performing color space conversion between digitized YCbCr color components and digitized RGB color components in accordance with a first embodiment of the present invention includes a programmable color lookup table means 1, first to third complement means 21 to 23, first to ninth polarity control means 31 to 39, first to third adder means and first to third compensation and limit circuits 51 to 53.

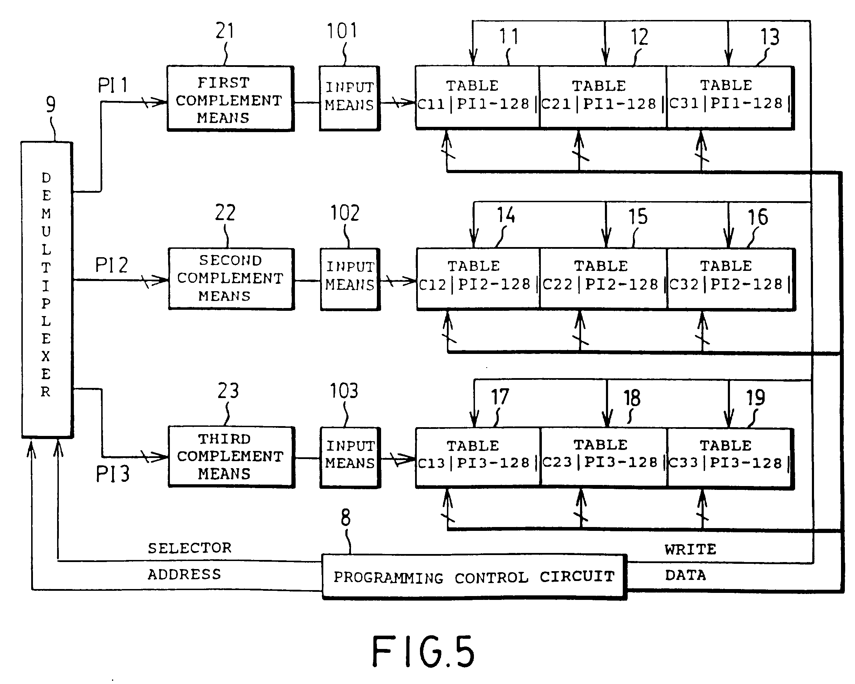

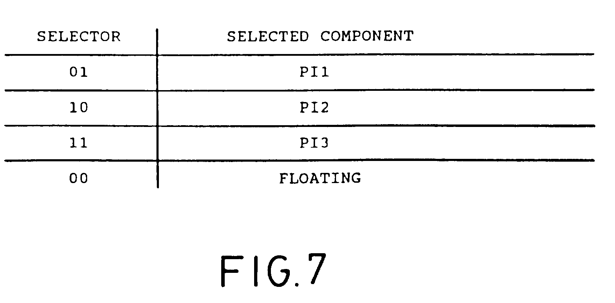

In the present embodiment, the programmable color lookup table means 1 is a RAM device. The lookup table means 1 has a plurality of address inputs and includes first to ninth segments 11 to 19, and input means 101, 102 and 103. The input means 101, 102 and 103 receive digitized PI1, PI2 and PI3 for addressing the address inputs of the lookup table means 1. In the present embodiment, each of the input means 101,102,103 is an address decoder. When converting the RGB components to the YCbCr components, the digitized transformation component values corresponding to an R-in-Y component, an R-in-Cb component, an R-in-Cr component, a G-in-Y component, a G-in-Cb component, a G-in-Cr component, a B-in-Y component, a B-in-Cb component and a B-in-Cr component are programmed into the first to ninth segments 11 to 19, respectively, based on the conversion (a). As best shown in Figs. 5 and 7, the programming of the lookup table means 1 is accomplished by a programming control circuit 8 and a demultiplexer 9. The demultiplexer 9 is connected to the first, second and third complement means 21 to 23. The programming control circuit 8 has a WRITE signal line and a DATA bus that are connected to the first to ninth segments 11 to 19 of the lookup table means 1. The control circuit 8 further has a SELECTOR signal line and a ADDRESS signal line that are connected to the demultiplexer 9. The control circuit provides a 2-bit selecting signal to the demultiplexer 9 via the SELECTOR signal line. When the selecting signal is 01, the first to third segments 11 to 13 are selected to be programmed. When the selecting signal is 10, the fourth to sixth segments 14 to 16 are selected to be programmed. When the selecting signal is 11, the seventh to ninth segments 17 to 19 are selected to be programmed. When the selecting signal is 00, programming of the lookup table means 1 is prohibited. Since the segments 11 to 19 of the lookup table means 1 corresponding to the same component of the original space are written thereinto simultaneously, programming of the entire lookup table means 1 requires only 3*128=384 write cycles. When converting the YCbCr components to the RGB components, the digitized transformation component values corresponding to a Y-in-R component, a Y-in-G component, a Y-in-B component, a Cb-in-R component, a Cb-in-G component, a Cb-in-B component, a Cr-in-R component, a Cr-in-G component and a Cr-in-B component are programmed into the first to ninth segments 11 to 19, respectively, based on the conversion (b) by a similar programming procedure as described above.

It should be recognized that the conversion from digitized YCbCr components to digitized RGB components is similar to the conversion from digitized RGB components to digitized YCbCr components. Therefore, the following description of the first embodiment of the present invention is based on the conversion from digitized RGB components to digitized YCbCr components only.

The first complement means 21 is connected to the input means 101 and receives the digitized R color component. The first complement means 21 generates 2's complement of the seven lower bits (PIm6 to PIm0) of the R color component when the most significant bit (PIm7) of the R color component is equal to 0.

The second complement means 22 is connected to the input means 102 and receives the digitized G color component. The second complement means 22 generates 2's complement of the seven lower bits of the G color component when the most significant bit of the G color component is equal to 0.

The third complement means 23 is connected to the input means 103 and receives the digitized B color component. The third complement means 23 generates 2's complement of the seven lower bits of the B color component when the most significant bit of the B color component is equal to 0.

The first polarity control means 31 includes a complement means 310 connected to an output of the first segment 11 of the lookup table means 1, an output shading circuit 311 connected to the complement means 310 and a detector 312. The complement means 310 generates 2's complement of the output of the first segment 11 of the lookup table means 1 when the most significant bit (Plm7) of the digitized R color component is equal to 0. The detector 312 detects whether the value of the digitized R component is 128 by means of an address signal (Am0) from the input means 101 and the most significant bit (Plm7) of the R component. The detector 312 generates a disabling signal when the value of the R component is 128. The shading circuit 311 outputs a value of 0 upon reception of the disabling signal from the detector 312. Otherwise, the shading circuit 311 outputs the output of the complement means 310.

The structure of the second polarity control means 32 is similar to that of the first polarity control means 31. The complement means (not shown) of the control means 32 is connected to an output of the second segment 12 of the lookup table means 1. The output shading circuit (not shown) of the control means 32 is connected to the complement means. The complement means generates 2's complement of the output of the second segment 12 of the lookup table means 1 when the most significant bit of the digitized R color component is equal to 0. The detector (not shown) of the control means 32 detects whether the value of the digitized R component is 128 by means of the address signal from the input means 101 and the most significant bit of the R component. The detector of the control means 32 generates a disabling signal when the value of the R component is 128. The shading circuit of the control means 32 outputs a value of 0 upon reception of the disabling signal from the detector. Otherwise, the shading circuit outputs the output of the complement means.

The structure of the third polarity control means 33 is similar to that of the first polarity control means 31. The complement means (not shown) of the control means 33 is connected to an output of the third segment 13 of the lookup table means 1. The output shading circuit (not shown) is connected to the complement means. The complement means generates 2's complement of the output of the third segment 13 of the lookup table means 1 when the most significant bit of the digitized R color component is equal to 0. The detector (not shown) of the control means 33 detects whether the value of the digitized R component is 128 by means of the address signal from the input means 101 and the most significant bit of the R component. The detector generates a disabling signal when the value of the R component is 128. The shading circuit outputs a value of 0 upon reception of the disabling signal from the detector. Otherwise, the shading circuit outputs the output of the complement means.

The structure of the fourth polarity control means 34 is similar to that of the first polarity control means 31. The complement means (not shown) of the control means 34 is connected to an output of the fourth segment 14 of the lookup table means 1. The output shading circuit (not shown) of the control means 34 is connected to the complement means. The complement means generates 2's complement of the output of the fourth segment 14 of the lookup table means 1 when the most significant bit of the digitized G color component is equal to 0. The detector (not shown) of the control means 34 detects whether the value of the digitized G component is 128 by means of an address signal from the input means 102 and the most significant bit of the G component. The detector generates a disabling signal when the value of the G component is 128. The shading circuit outputs a value of 0 upon reception of the disabling signal from the detector. Otherwise, the shading circuit outputs the output of the complement means.

The structure of the fifth polarity control means 35 is similar to that of the first polarity control means 31. The complement means (not shown) of the control means 35 is connected to an output of the fifth segment 15 of the lookup table means 1. The output shading circuit (not shown) of the control means 35 is connected to the complement means. The complement means generates 2's complement of the output of the fifth segment 15 of the lookup table means 1 when the most significant bit of the digitized G color component is equal to 0. The detector (not shown) of the control means 35 detects whether the value of the digitized G component is 128 by means of the address signal from the input means 102 and the most significant bit of the G component. The detector generates a disabling signal when the value of the G component is 128. The shading circuit outputs a value of 0 upon reception of the disabling signal from the control means 35. Otherwise, the shading circuit outputs the output of the complement means.

The structure of the sixth polarity control means 36 is similar to that of the first polarity control means 31. The complement means (not shown) of the control means 36 is connected to an output of the sixth segment 16 of the lookup table means 1. The output shading circuit (not shown) of the control means 36 is connected to the complement means. The complement means generates 2's complement of the output of the sixth segment 16 of the lookup table means 1 when the most significant bit of the digitized G color component is equal to 0. The detector (not shown) of the control means 36 detects whether the value of the digitized G component is 128 by means of the address signal from the input means 102 and the most significant bit of the G component. The detector generates a disabling signal when the value of the G component is 128. The shading circuit outputs a value of 0 upon reception of the disabling signal from the detector. Otherwise, the shading circuit outputs the output of the complement means.

The structure of the seventh polarity control means 37 is similar to that of the first polarity control means 31. The complement means (not shown) of the control means 37 is connected to an output of the seventh segment 17 of the lookup table means 1. The output shading circuit (not shown) of the control means 37 is connected to the complement means. The complement means generates 2's complement of the output of the seventh segment 17 of the lookup table means 1 when the most significant bit of the digitized B color component is equal to 0. The detector (not shown) of the control means 37 detects whether the value of the digitized B component is 128 by means of an address signal from the input means 103 and the most significant bit of the B component. The detector generates a disabling signal when the value of the B component is 128. The shading circuit outputs a value of 0 upon reception of the disabling signal from the detector. Otherwise, the shading circuit outputs the output of the complement means.

The structure of the eighth polarity control means 38 is similar to that of the first polarity control means 31. The complement means (not shown) of the control means 38 is connected to an output of the eighth segment 18 of the lookup table means 1. The output shading circuit (not shown) of the control means 38 is connected to the complement means. The complement means generates 2's complement of the output of the eighth segment 18 of the lookup table means 1 when the most significant bit of the digitized B color component is equal to 0. The detector (not shown) of the control means 38 detects whether the value of the digitized B component is 128 by means of the address signal from the input means 103 and the most significant bit of the B component. The detector generates a disabling signal when the value of the B component is 128. The shading circuit outputs a value of 0 upon reception of the disabling signal from the detector. Otherwise, the shading circuit outputs the output of the complement means.

The structure of the ninth polarity control means 39 is similar to that of the first polarity control means 31. The complement means (not shown) of the control means 39 is connected to an output of the ninth segment 19 of the lookup table means 1. The output shading circuit (not shown) of the control means 39 is connected to the complement means. The complement means generates 2's complement of the output of the ninth segment 19 of the lookup table means 1 when the most significant bit of the digitized B color component is equal to 0. The detector (not shown) of the control means 39 detects whether the value of the digitized B component is 128 by means of the address signal from the input means 103 and the most significant bit of the B component. The detector generates a disabling signal when the value of the B component is 128. The shading circuit outputs a value of 0 upon reception of the disabling signal from the detector. Otherwise, the shading circuit outputs the output of the complement means.

The first adder means includes a first adder 41 and a second adder 42. The first adder 41 is connected to the output shading circuit 311 of the first output polarity control means 31 and to the output shading circuit of the fourth output polarity control means 34 so as to generate an output corresponding to the sum of an output of the shading circuit 311 of the first output polarity control means 31 and an output of the shading circuit of the fourth output polarity control means 34. The second adder 42 is connected to the output shading circuit of the seventh output polarity control means 37 and to the first adder 41 so as to generate an output corresponding to the sum of the output of the first adder 41 and an output of the seventh output polarity control means 37 in order to obtain the digitized Y component.

The second adder means includes a third adder 43 and a fourth adder 44. The third adder 43 is connected to the output shading circuit of the second output polarity control means 32 and to the output shading circuit of the fifth output polarity control means 35 so as to generate an output corresponding to the sum of an output of the second output polarity control means 32 and an output of the fifth output polarity control means 35. The fourth adder 44 is connected to the third adder 43 and to the output shading circuit of the eighth output polarity control means 38 so as to generate an output corresponding to the sum of the output of the third adder 43 and an output of the eighth output polarity control means 38 in order to obtain the digitized Cb component.

The third adder means includes a fifth adder 45 and a sixth adder 46. The fifth adder 45 is connected to the output shading circuit of the third output polarity control means 33 and to the output shading circuit of the sixth output polarity control means 36 so as to generate an output corresponding to the sum of an output of the third output polarity control means 33 and an output of the sixth output polarity control means 36. The sixth adder 46 is connected to the fifth adder 45 and to the output shading circuit of the ninth output polarity control means 39 so as to generate an output corresponding to the sum of the output of the fifth adder 45 and an output of the ninth output polarity control means 39 in order to obtain the digitized Cr component.

The first compensation and limit circuit 51 is connected to the second adder 42 of the first adder means so as to receive the digitized Y component. The first compensation and limit circuit 51 compensates a constant to the value of the Y component from the second adder 42 and limits the compensated value of the Y component to between 0 and 255. If the compensated value of the Y component exceeds 255, the circuit 51 limits the value to 255. If the compensated value of the Y component is negative, the circuit 51 limits the value to 0.

The second compensation and limit circuit 52 is connected to the fourth adder 44 of the second adder means so as to receive the digitized Cb component. The second compensation and limit circuit 52 compensates a constant to the value of the Cb component from the fourth adder 44 and limits the compensated value of the Cb component to between 0 and 255. If the compensated value of the Cb component exceeds 255, the circuit 52 limits the value to 255. If the compensated value of the Cb component is negative, the circuit 52 limits the value to 0.

The third compensation and limit circuit 53 is connected to the sixth adder 46 of the third adder means so as to receive the digitized Cr component. The third compensation and limit circuit 53 compensates a constant to the value of the Cr component from the sixth adder 46 and limits the compensated value of the Cr component to between 0 and 255. If the compensated value of the Cr component exceeds 255, the circuit 53 limits the value to 255. If the compensated value of the Cr component is negative, the circuit 53 limits the value to 0. The first, second and third compensation and limit circuits 51,52,53 are designed to do level shifting and to prevent the occurrence of overflow.

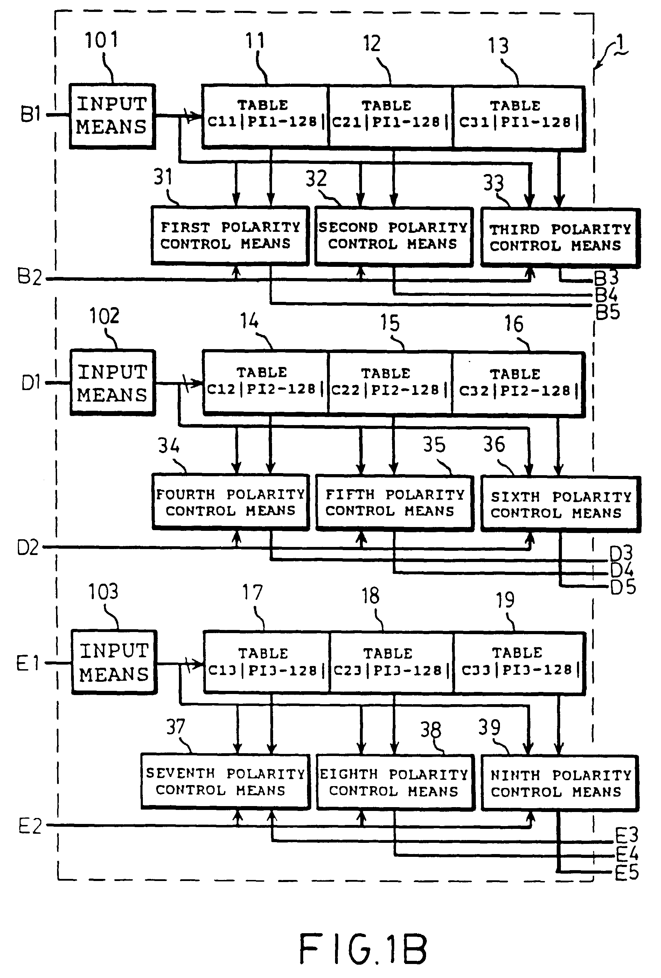

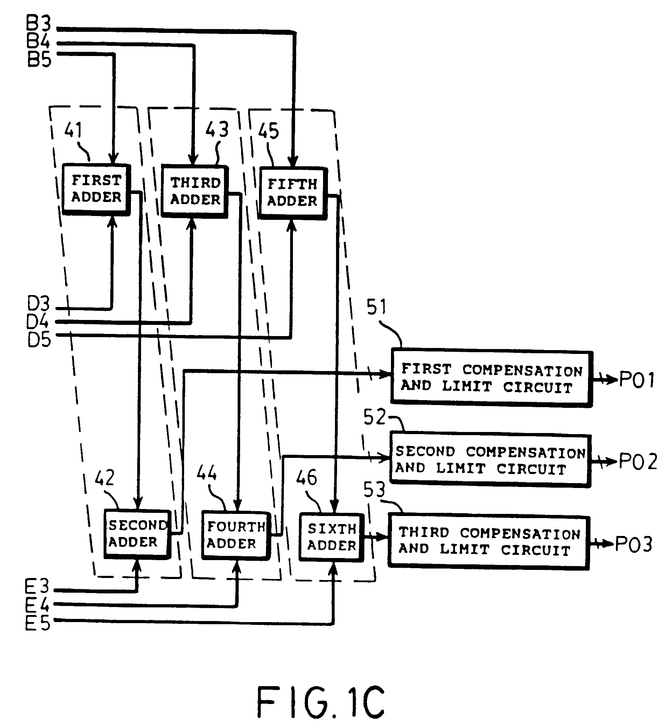

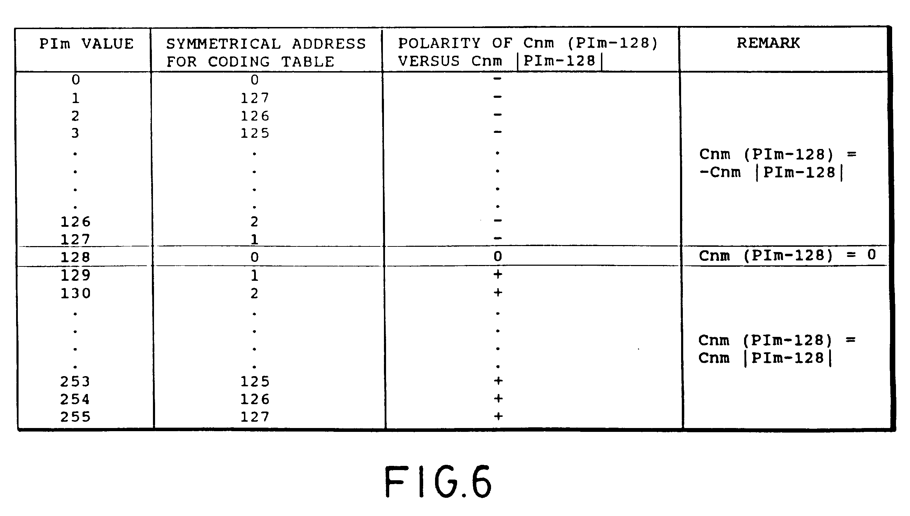

Referring now to Figs. 1A, 1B, 1C and 6, the reason for using the first to third complement means 21 to 23 and the first to ninth output polarity control means 31 to 39 will be described hereinafter. Since the digitized color components in the present embodiment are 8-bit components, the Plm value thus ranges between 0 to 255. It can be seen that the 2's complement of a Plm value within the range of 1 to 127 is identical to a corresponding one of the Plm values within the range of 129 to 255. For example, the 2's complement of 1 is equal to 255, the 2's complement of 2 is equal to 254, and so on. It is noted that when the conversions (a) and (b) are used, the absolute values of the transformation component values corresponding to the Plm values of 1 and 255 are equal in magnitude but differ in polarity, those corresponding to the Plm values of 2 and 254 are equal in magnitude but differ in polarity, and so on. Therefore, the Plm value of 1 and 255 can refer to the same address, the Plm value of 2 and 254 can also refer to the same address, and so on. The Plm value of 128 can refer to an address in which the Plm value of 0 is encoded, thereby minimizing the memory requirements of the lookup table means 1 to $9*2^7*8$ bits = 1.125K bytes. The first to third complement means 21 to 23 are used to generate and transmit the 2's complement of a Plm value ranging between 0 and 127 into the address inputs of the lookup table means 1 to effect reference to the corresponding transformation component value. The output polarity control means 31 to 39 are used to invert the polarity of the corresponding transformation component value when the Plm value ranges between 0 and 127.

It should be appreciated that the first embodiment of the present invention is operable even when the first to third complement means 21 to 23 and the first to ninth output polarity control means 31 to 39 are not employed. When the first to third complement means 21 to 23 and the output polarity control means 31 to 39 are not in use, the transformation component values are programmed into the first to ninth segments 11 to 19 of the lookup table means 1 based on the following conversion

$$
\begin{vmatrix} Y \\ Cb \\ Cr \end{vmatrix} = \begin{vmatrix} 0.229 & 0.587 & 0.114 \\ -0.173 & -0.338 & 0.511 \\ 0.511 & -0.428 & -0.083 \end{vmatrix} \begin{vmatrix} R \\ G \\ B \end{vmatrix} + \begin{vmatrix} 0 \\ 128 \\ 128 \end{vmatrix} \quad (d)
$$

when converting RGB components to YCbCr components, and based on the following conversion

$$
\begin{vmatrix} R \\ G \\ B \end{vmatrix} = \begin{vmatrix} 1 & -0.001 & 1.370 \\ 1 & -0.336 & -0.698 \\ 1 & 1.733 & 0.001 \end{vmatrix} \begin{vmatrix} Y \\ Cb \\ Cr \end{vmatrix} + \begin{vmatrix} -175 \\ 132 \\ -222 \end{vmatrix} \quad (e)
$$

when converting YCbCr components to RGB components. Although the memory requirement is larger, that is $9*2^8*8$ bits = 2.25k bytes, it is still smaller when compared to the known color space conversion techniques.

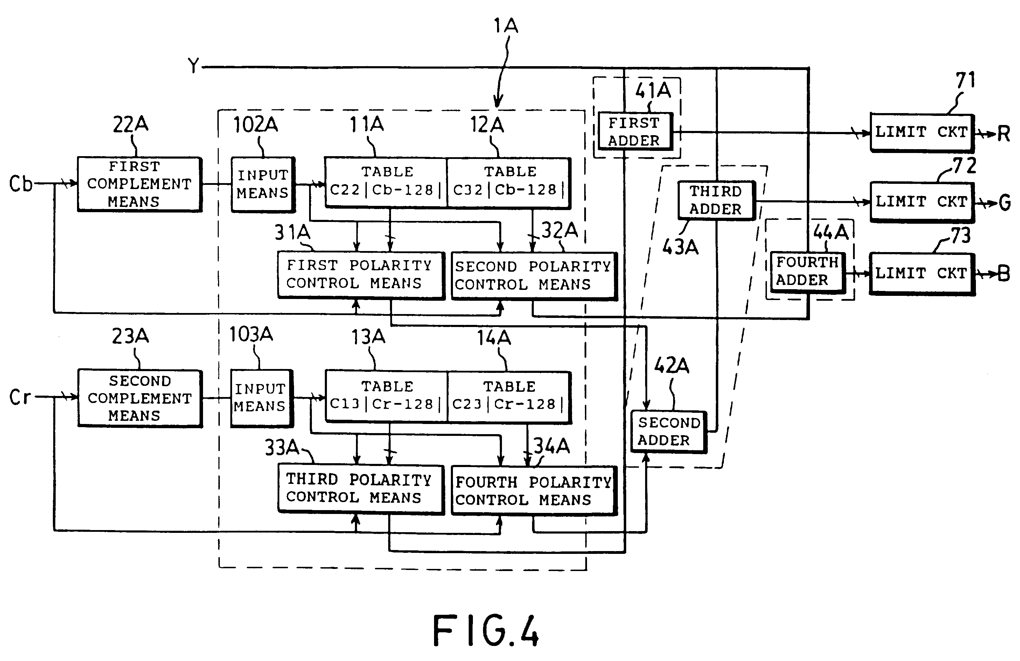

Referring now to Fig. 4, a second embodiment of the present invention is shown. The second embodiment is used to convert YCbCr components to RGB components. From the conversion (e), since the transformation coefficients corresponding to the Y-in-R component, the Y-in-G component and the Y-in-B component are all equal to one, and since the transformation coefficients corresponding to the Cb-in-R component and the Cr-in-B component are both approximately equal to zero, a simplified lookup table means (1A), which has a plurality of address inputs and which includes only first to fourth segments (11A to 14A), can thus be employed. In the present embodiment, the lookup table means (1A) is a ROM device and further includes input means (102A,103A) to receive digitized Cb and Cr components for addressing the address inputs thereof. The transformation component values corresponding to the Cb-in-G, the Cb-in-B, the Cr-in-R and the Cr-in-G components occupy the first to fourth segments (11A to 14A), respectively.

A first complement means (22A) is connected to the input means (102A) and receives the digitized Cb color component. The first complement means (22A) generates 2's complement of the seven lower bits of the Cb color component when the most significant bit of the Cb color component is equal to 0.

A second complement means (23A) is connected to the input means (103A) and receives the digitized Cr color component. The second complement means (23A) generates 2's complement of the seven lower bits of the Cr color component when the most significant bit of the Cr color component is equal to 0.

A first polarity control means (31A) is connected to the first segment (11A) of the lookup table means (1A) and receives the output of the first segment (11A). The first polarity control means (31A) outputs a value of 0 when the value of the digitized Cb component is 128. Otherwise, the first polarity control means (31A) generates and outputs 2's complement of the output of the first segment (11A) when the most significant bit of the Cb component is equal to 0, and outputs the output of the first segment (11A) when the most significant bit of the Cb component is equal to 1.

A second polarity control means (32A) is connected to the second segment (12A) of the lookup table means (1A) and receives the output of the second segment (12A). The second polarity control means (32A) outputs a value of 0 when the value of the digitized Cb component is 128. Otherwise, the second polarity control means (32A) generates and outputs 2's complement of the output of the second segment (12A) when the most significant bit of the Cb component is equal to 0, and outputs the output of the second segment (12A) when the most significant bit of the Cb component is equal to 1.

A third polarity control means (33A) is connected to the third segment (13A) of the lookup table means (1A) and receives the output of the third segment (13A). The third polarity control means (33A) outputs a value of 0 when the value of the digitized Cr component is 128. Otherwise, the third polarity control means (33A) generates and outputs 2's complement of the output of the third segment (13A) when the most significant bit of the Cr component is equal to 0, and outputs the output of the third segment (13A) when the most significant bit of the Cr component is equal to 1.

A fourth polarity control means (34A) is connected to the fourth segment (14A) of the lookup table means (1A) and receives the output of the fourth segment (14A). The fourth polarity control means (34A) outputs a value of 0 when the value of the digitized Cr component is 128. Otherwise, the fourth polarity control means (34A) generates and output 2's complement of the output of the fourth segment (14A) when the most significant bit of the Cr component is equal to 0, and outputs the output of the fourth segment (14A) when the most significant bit of the Cr component is equal to 1.

A first adder means includes a first adder (41A) which generates an output corresponding to the sum of the Y component and an output of the third output polarity control means (33A) so as to obtain the digitized R component.

A second adder means includes a second adder (42A) and a third adder (43A). The second adder (42A) is connected to the first output polarity control means (31A) and to the fourth output polarity control means (34A) so as to generate an output corresponding to the sum of an output of the first output polarity control means (31A) and an output of the fourth output polarity control means (34A). The third adder (43A) is connected to the second adder (42A) and receives the Y component so as to generate an output corresponding to the sum of the Y component and the output of the second adder (42A) in order to obtain the digitized G component.

A third adder means includes a fourth adder (44A) which generates an output corresponding to the sum of the Y component and an output of the second output polarity control means (32A) so as to obtain the digitized B component.

A first limit circuit 71 is connected to the first adder (41A) so as to receive the digitized R component. The first limit circuit 71 limits the value of the R component to between 0 and 255. If the value of the R component exceeds 255, the circuit 71 limits the value to 255. If the value of the R component is negative, the circuit 71 limits the value to 0.

A second limit circuit 72 is connected to the third adder (43A) so as to receive the digitized G component. The second limit circuit 72 limits the value of the G component to between 0 and 255. If the value of the G component exceeds 255, the circuit 72 limits the value to 255. If the value of the G component is negative, the circuit 72 limits the value to 0.

A third limit circuit 73 is connected to the fourth adder (44A) so as to receive the digitized B component. The third limit circuit 73 limits the value of the B component to between 0 and 255. If the value of the B component exceeds 255, the circuit 73 limits the value to 255. If the value of the B component is negative, the circuit 73 limits the value to 0.

Accordingly, the first embodiment of the present invention provides a method and apparatus for performing color space conversion between digitized YCbCr color components and digitized RGB color components by programming the programmable color lookup table means 1 with transformation component values based on the conversions (a) and (b). The memory requirements in the first embodiment is minimized to $9*2^7*8$ bits (1.125K bytes) so that the cost is reduced. The second embodiment of the present invention provides an apparatus for converting digitized YCbCr components to digitized RGB components, which apparatus has a simplified structure so as to further minimize the memory requirements in order to further reduce the cost thereof.

## Claims

1.  A method for performing color space conversion between digitized RGB color components and digitized YCbCr color components, said method being characterized by the steps of:

    (A) when converting said RGB color components to said YCbCr color components,

    (a1) providing a programmable color lookup table means (1) with digitized transformation component values corresponding to an R-in-Y component, a G-in-Y component, a B-in-Y component, an R-in-Cb component, a G-in-Cb component, a B-in-Cb component, an R-in-Cr component, a G-in-Cr component and a B-in-Cr component based on a set of conversions from individual digitized R, G and B components, said programmable color lookup table means (1) having a plurality of address inputs and including first to ninth segments (11 to 19), said transformation component values corresponding to said R-in-Y component, said R-in-Cb component, said R-in-Cr component, said G-in-Y component, said G-in-Cb component, said G-in-Cr component, said B-in-Y component, said B-in-Cb component and said B-in-Cr component occupying said first to ninth segments, respectively;

(a2) generating 2's complement of said R color component when a most significant bit of the R color component is equal to 0, generating 2's complement of said G color component when a most significant bit of the G color component is equal to 0 and generating 2's complement of said B color component when a most significant bit of the B color component is equal to 0;

(a3) inputting said digitized R, G and B components to said address inputs of said color lookup table means (1) to effect reference to corresponding said R-in-Y transformation component value, corresponding said G-in-Y transformation component value, corresponding said B-in-Y transformation component value, corresponding said R-in-Cb transformation component value, corresponding said G-in-Cb transformation component value, corresponding said B-in-Cb transformation component value, corresponding said R-in-Cr transformation component value, corresponding said G-in-Cr transformation component value and corresponding said B-in-Cr transformation component value;

(a4) inversing polarities of said corresponding R-in-Y transformation component value, said corresponding R-in-Cb transformation component value and said corresponding R-in-Cr transformation component value when said most significant bit of said R color component is equal to 0, inversing polarities of said corresponding G-in-Y transformation component value, said corresponding G-in-Cb transformation component value and said corresponding G-in-Cr transformation component value when said most significant bit of said G color component is equal to 0, and inversing polarities of said corresponding B-in-Y transformation component value, said corresponding B-in-Cb transformation component value and said corresponding B-in-Cr transformation component value when said most significant bit of said B color component is equal to 0;

(a5) adding said corresponding R-in-Y transformation component value, said corresponding G-in-Y transformation component value and said corresponding B-in-Y transformation component value to obtain the digitized Y component;

(a6) adding said corresponding R-in-Cb transformation component value, said corresponding G-in-Cb transformation component value and said corresponding B-in-Cb transformation component value to obtain the digitized Cb component; and

(a7) adding said corresponding R-in-Cr transformation component value, said corresponding G-in-Cr transformation component value and said corresponding B-in-Cr transformation component value to obtain the digitized Cr component.

2. A method as claimed in Claim 1, characterized in that each of the RGB color components and YCbCr color components is an 8-bit component and said set of conversions used in said step (a1) is

$$
\begin{vmatrix} Y \\ Cb \\ Cr \end{vmatrix} = \begin{vmatrix} 0.229 & 0.587 & 0.114 \\ -0.173 & -0.338 & 0.511 \\ 0.511 & -0.428 & -0.083 \end{vmatrix} \begin{vmatrix} R-128 \\ G-128 \\ B-128 \end{vmatrix} + \begin{vmatrix} 128 \\ 128 \\ 128 \end{vmatrix} .
$$

3. A method as claimed in Claim 1, characterized in that said steps (a5), (a6) and (a7) occur simultaneously.

4. A method as claimed in Claim 1, further characterized by the steps of:

(B) when convertina said YCbCr color components to said RGB color components,

(b1) providing said color lookup table means (1) with digitized transformation component values corresponding to a Y-in-R component, a Cb-in-R component, a Cr-in-R component, a Y-in-G component, a Cb-in-G component, a Cr-in-G component, a Y-in-B component, a Cb-in-B component and a Cr-in-B component based on a set of conversions from individual digitized Y, Cb and Cr components, said transformation component value corresponding to said Y-in-R component, said Y-in-G component, said Y-in-B component, said Cb-in-R component, said Cb-in-G component, said Cb-in-B component, said Cr-in-R component, said Cr-in-G component and said Cr-in-B component occupying said first to ninth segments (11-19), respectively;

(b2) inputting said digitized Y, Cb and Cr components to said address inputs of said color lookup table means (1) to effect reference to corresponding said Y-in-R transformation component value, corresponding said Cb-in-R transformation component value, corresponding said Cr-in-R transformation component value, corresponding said Y-in-G transformation component value, corresponding said Cb-in-G transformation component value, corresponding said Cr-in-G transformation component value, corresponding said Y-in-B transformation component value, corresponding said Cb-in-B transformation component value and corresponding said Cr-in-B transformation component value;

(b3) adding said corresponding Y-in-R transformation component value, said corresponding Cb-in-R transformation component value and said corresponding Cr-in-R transformation component value to obtain the digitized R component;

(b4) adding said corresponding Y-in-G transformation component value, said corresponding Cb-in-G transformation component value and said corresponding Cr-in-G transformation component value to obtain the digitized G component; and

(b5) adding said corresponding Y-in-B transformation component value, said corresponding Cb-in-B transformation component value and said corresponding Cr-in-B transformation component value to obtain the digitized B component.

5. A method as claimed in Claim 4, characterized in that said steps (b3) , (b4) and (b5) occur simultaneously.

6. A method as claimed in Claim 3, characterized in that said set of conversions used in said step (b1) is

$$\begin{vmatrix} R \\ G \\ B \end{vmatrix} = \begin{vmatrix} 1 & -0.001 & 1.370 \\ 1 & -0.336 & -0.698 \\ 1 & 1.733 & 0.001 \end{vmatrix} \begin{vmatrix} Y \\ Cb \\ Cr \end{vmatrix} + \begin{vmatrix} -175 \\ 132 \\ -222 \end{vmatrix}.$$

7. A method as claimed in Claim 4, further characterized by, prior to step (b2), a step of generating 2's complement of said Y color component when a most significant bit of the Y color component is equal to 0, a step of generating 2's complement of said Cb color component when a most significant bit of the Cb color component is equal to 0 and a step of generating 2's complement of said Cr color component when a most sianificant bit of the Cr color component is equal to 0, and prior to steps (b3), (b4) and (b5), a step of inversing polarities of said corresponding Y-in-R transformation component value, said corresponding Y-in-G transformation component value and said corresponding Y-in-B transformation component value when said most significant bit of said Y color component is equal to 0, a step of inversing polarities of said corresponding Cb-in-R transformation component value, said corresponding Cb-in-G transformation component value and said corresponding Cb-in-B transformation component value when said most significant bit of said Cb color component is equal to 0, and a step of inversing polarities of said corresponding Cr-in-R transformation component value, said corresponding Cr-in-G transformation component value and said corresponding Cr-in-B transformation component value when said most significant bit of said Cr color component is equal to 0.

8. A method as claimed in Claim 7, characterized in that each of the RGB color components and YCbCr color components is an 8-bit component and said set of conversions used in said step (b1) is

$$\begin{vmatrix} R \\ G \\ B \end{vmatrix} = \begin{vmatrix} 1 & -0.001 & 1.370 \\ 1 & -0.336 & -0.698 \\ 1 & 1.733 & 0.001 \end{vmatrix} \begin{vmatrix} Y & -128 \\ Cb-128 \\ Cr-128 \end{vmatrix} + \begin{vmatrix} 128 \\ 128 \\ 128 \end{vmatrix}.$$

9. An apparatus for performing the converting method as claimed in Claim 1, characterized by:

color lookup table means (1) for storing digitized transformation component values corresponding to an R-in-Y component, a G-in-Y component, a B-in-Y component, an R-in-Cb component. a G-in-Cb component. a B-in-Cb component, an R-in-Cr component, a G-in-Cr component and a B-in-Cr component based on a set of conversions from individual digitized R, G and B components, said color lookup table means (1) having a plurality of address inputs and including first to ninth segments (11-19), said transformation component values corresponding to said R-in-Y component, said R-in-Cb component, said R-in-Cr component, said G-in-Y component, said G-in-Cb component, said G-in-Cr component, said B-in-Y component, said B-in-Cb component and said B-in-Cr component occupying said first to ninth segments (11-19), respectively, said lookup table means (1) further including means (101,102,103) to receive the digitized R, G and B components for addressing said address inputs of said lookup table means (1);

a first adder means for generating an output corresponding to the sum of an output of said first segment (11) of said lookup table means (1), an output of said fourth segment (14) of said lookup table means (1) and an output of said seventh segment (17) of said lookup table means (1) so as to obtain the digitized Y component;

a second adder means for generating an output corresponding to the sum of an output of said second segment (12) of said lookup table means (1), an output of said fifth segment (15) of said lookup table means (1) and an output of said eighth segment (18) of said lookup table means (1) so as to obtain the digitized Cb component:

a third adder means for generating an output corresponding to the sum of an output of said third segment (13) of said lookup table means (1), an output of said sixth segment (16) of said lookup table means (1) and an output of said ninth segment (19) of said lookup table means (1) so as to obtain the digitized Cr component;

a first complement means (21) coupled to said address inputs of said lookup table means (1), said first complement means (22) receiving said digitized R color component and generating 2's complement of said R color component when a most significant bit of the R color component is equal to 0;

a second complement means (22) coupled to said address inputs of said lookup table means (1), said second complement means (22) receiving said digitized G color component and generating 2's complement of said G color component when a most significant bit of the G color component is equal to 0;

a third complement means (23) coupled to said address inputs of said lookup table means (1), said third complement means (23) receiving said digitized B color component and generating 2's complement of said B color component when a most significant bit of the B color component is equal to 0;

a first polarity control means (31) interconnecting said first segment (11) of said lookup table means (1) and said first adder means for inversing polarity of said corresponding R-in-Y transformation component value from said first seament (11) of said lookup table means (1) when said most significant bit of said R color component is equal to 0;

a second polarity control means (32) interconnecting said second segment (12) of said lookup table means (1) and said second adder means for inversing polarity of said corresponding R-in-Cb transformation component value from said second segment (12) of said lookup table means (1) when said most significant bit of said R color component is equal to 0;

a third polarity control means (33) interconnecting said third segment (13) of said lookup table means (1) and said third adder means for inversing polarity of said corresponding R-in-Cr transformation component value from said third segment (13) of said lookup table means (1) when said most significant bit of said R color component is equal to 0;

a fourth polarity control means (34) interconnecting said fourth segment (14) of said lookup table means (1) and said first adder means for inversing polarity of said corresponding G-in-Y transformation component value from said fourth segment (14) of said lookup table means (1) when said most significant bit of said G color component is equal to 0;

a fifth polarity control means (35) interconnecting said fifth segment (15) of said lookup table means (1) and said second adder means for inversing polarity of said corresponding G-in-Cb transformation component value from said fifth segment (15) of said lookup table means (1) when said most significant bit of said G color component is eaual to 0:

a sixth polarity control means (36) interconnecting said sixth segment (16) of said lookup table means (1) and said third adder means for inversing polarity of said corresponding G-in-Cr transformation component value from said sixth segment (16) of said lookup table means (1) when said most significant bit of said G color component is equal to 0;

a seventh polarity control means (37) interconnecting said seventh segment (17) of said lookup table means (1) and said first adder means for inversing polarity of said corresponding B-in-Y transformation component value from said seventh segment (17) of said lookup table means (1) when said most significant bit of said B color component is equal to 0;

an eighth polarity control means (38) interconnecting said eighth segment (18) of said lookup table means (1) and said second adder means for inversing polarity of said corresponding B-in-Cb transformation component value from said eighth segment (18) of said lookup table means (1) when said most significant bit of said B color component is equal to 0; and

a ninth polarity control means (39) interconnecting said ninth segment (19) of said lookup table means (1) and said third adder means for inversing polarity of said corresponding B-in-Cr transformation component value from said ninth segment (19) of said lookup table means (1) when said most significant bit of said B color component is eaual to 0.

**10.** An apparatus as claimed in Claim 9, characterized in that said RGB color components and YCbCr color components are 8-bit components, said set of conversions being

$$\begin{vmatrix} Y \\ Cb \\ Cr \end{vmatrix} = \begin{vmatrix} 0.229 & 0.587 & 0.114 \\ -0.173 & -0.338 & 0.511 \\ 0.511 & -0.428 & -0.083 \end{vmatrix} \begin{vmatrix} R-128 \\ G-128 \\ B-128 \end{vmatrix} + \begin{vmatrix} 128 \\ 128 \\ 128 \end{vmatrix}.$$

**11.** A method for converting digitized YCbCr color components to digitized RGB color components, said method being characterized by the steps of:

(i) providing a color lookup table means (1A) which has a plurality of address inputs and which includes a first segment (11A) provided with a digitized transformation component value corresponding to a Cb-in-G component, a second segment (12A) provided with a digitized transformation value corresponding to a Cb-in-B component, a third segment (13A) provided with a digitized transformation component value corresponding to a Cr-in-R component, and a fourth segment (14A) provided with a digitized transformation component value corresponding to a Cr-in-G component;

(ii) generating 2's complement of said Cb color component when a most significant bit of the Cb color component is equal to 0, and generating 2's complement of said Cr color component when a most significant bit of the Cr color component is equal to 0;

(iii) inputting said digitized Cb and Cr components to said address inputs of said color lookup table means (1A) to effect reference to corresponding said Cb-in-G transformation component value, corresponding said Cb-in-B transformation component value, corresponding said Cr-in-R transformation component value and corresponding said Cr-in-G transformation component value;

(iv) inversing polarities of said corresponding Cb-in-G transformation component value and said corresponding Cb-in-B transformation component value when said most significant bit of said Cb color component is equal to 0, and a step of inversing polarities of said corresponding Cr-in-R transformation component value and said corresponding Cr-in-G transformation component value when said most significant bit of said Cr color component is equal to 0;

(v) adding said Y component and said corresponding Cr-in-R transformation component value to obtain the digitized R component;

(vi) adding said Y component, said corresponding Cb-in-G transformation component value and said corresponding Cr-in-G transformation component value to obtain the digitized G component; and

(vii) adding said Y component and said corresponding Cb-in-B transformation component value to obtain the digitized B component.

**12.** A method as claimed in Claim 11, characterized in that each of the RGB color components and YCbCr color components is an 8-bit component, and said set of conversions is

$$\begin{vmatrix} R \\ G \\ B \end{vmatrix} = \begin{vmatrix} 1 & -0.001 & 1.370 \\ 1 & -0.336 & -0.698 \\ 1 & 1.733 & 0.001 \end{vmatrix} \begin{vmatrix} Y -128 \\ Cb-128 \\ Cr-128 \end{vmatrix} + \begin{vmatrix} 128 \\ 128 \\ 128 \end{vmatrix}.$$

**13.** A method as claimed in Claim 11, characterized in that said steps (v), (vi) and (vii) occur simultaneously.

**14.** An apparatus for performing the converting method as claimed in Claim 11, characterized by:

color lookup table means (1A) which has a plurality of address inputs and which includes a first segment (11A) provided with a digitized transformation component value corresponding to a Cb-in-G component, a second segment (12A) provided with a digitized transformation component value corresponding to a Cb-in-B component, a third segment (13A) provided with a digitized transformation component value corresponding to a Cr-in-R component, and a fourth segment (14A) provided with a digitized transformation component value corresponding to a Cr-in-G component, said Cb-in-G, said Cb-in-B, said Cr-in-R and said Cr-in-G transformation component values being based on a set of conversions from individual digitized Y, Cb and Cr components, said lookup table means (1A) further including means (102A,103A) for receiving the digitized Cb and Cr components and for addressing said address inputs of said lookup table means;

a first adder means for generating an output corresponding to the sum of said Y component and an output of said third segment (13A) of said lookup table means (1A) so as to obtain the digitized R component;

a second adder means for generating an output corresponding to the sum of said Y component, an output of said first segment (11A) of said lookup table means (1A) and an output of said fourth segment (14A) of said lookup table means (1A) so as to obtain the digitized G component:

a third adder means for generating an output corresponding to the sum of said Y component and an output of said second segment (12A) of said lookup table means (1A) so as to obtain the digitized B component;

a first complement means (22A) coupled to said address inputs of said lookup table means (1A), said first complement means receiving said digitized Cb color component and generating 2's complement of said Cb color component when a most significant bit of the Cb color component is equal to 0;

a second complement means (23A) coupled to said address inputs of said lookup table means (1A), said second complement means receiving said digitized Cr color component and generating 2's complement of said Cr color component when a most significant bit of the Cr color component is equal to 0;

a first polarity control means (31A) interconnecting said first segment (11A) of said lookup table means (1A) and said second adder means for inversing polarity of said corresponding Cb-in-G transformation component value from said first segment (11A) of said lookup table means (1A) when said most significant bit of said Cb color component is equal to 0;

a second polarity control means (32A) interconnecting said second segment (12A) of said lookup table means (1A) and said third adder means for inversing polarity of said corresponding Cb-in-B transformation component value from said second segment (12A) of said lookup table means (1A) when said most significant bit of said Cb color component is equal to 0;

a third polarity control means (33A) interconnecting said third segment (13A) of said lookup table means (1A) and said first adder means for inversing polarity of said corresponding Cr-in-R transformation component value from said third segment (13A) of said lookup table means (1A) when said most significant bit of said Cr color component is equal to 0; and

a fourth polarity control means (34A) interconnecting said fourth segment (14A) of said lookup table means (1A) and said second adder means for inversing polarity of said corresponding Cr-in-G transformation component value from said fourth segment (14A) of said lookup table means (1A) when said most significant bit of said Cr color component is equal to 0.

15. An apparatus as claimed in Claim 14, characterized in that each of the YCbCr color components and RGB color components is an 8-bit component and said set of conversions is

$$\begin{vmatrix} R \\ G \\ B \end{vmatrix} = \begin{vmatrix} 1 & -0.001 & 1.370 \\ 1 & -0.336 & -0.698 \\ 1 & 1.733 & 0.001 \end{vmatrix} \begin{vmatrix} Y & -128 \\ Cb-128 \\ Cr-128 \end{vmatrix} + \begin{vmatrix} 128 \\ 128 \\ 128 \end{vmatrix}.$$

**Patentansprüche**

1. Verfahren zum Durchführen einer Farbraumumwandlung zwischen digitalisierten RGB-Farbkomponenten und digitalisierten YCbCr-Farbkomponenten, **gekennzeichnet durch** folgende Schritte:

(A) Bei der Umwandlung der RGB-Farbkomponenten in die YCbCr-Farbkomponenten:

(a1) Bereitstellen einer programmierbaren Farbtabelleneinrichtung (1) mit digitalisierten Transformations-Komponentenwerten entsprechend einer R-in-Y-Komponente, einer G-in-Y-Komponente, einer B-in-Y-Komponente, einer R-in-Cb-Komponente, einer G-in-Cb-Komponente, einer B-in-Cb-Komponente, einer R-in-Cr-Komponente, einer G-in-Cr-Komponente und einer B-in-Cr-Komponente, basierend auf einer Menge von Umwandlungen von individuellen digitalisierten R-, G- und B-Komponenten, wobei die programmierbare Farbtabelleneinrichtung (1) mehrere Adresseneingänge aufweist und ein erstes bis neuntes Segment (11 bis 19) beinhaltet, wobei die Transformations-Komponentenwerte entsprechend der R-in-Y-Komponente, der R-in-Cb-Komponente, der R-in-Cr-Komponente, der G-in-Y-Komponente, der G-in-Cb-Komponente, der G-in-Cr-Komponente, der B-in-Y-Komponente, der B-in-CB-Komponente und der B-in-Cr-Komponente das erste bis neunte Segment in der genannten Folge belegen;

(a2) Erzeugen des 2er-Komplements der R-Farbkomponente, wenn das höchstwertige Bit der R-Farbkomponente den Wert 0 hat, Erzeugen des 2er-Komplements der G-Farbkomponente, wenn das höchstwertige Bit der G-Farbkomponente den Wert 0 hat, und Erzeugen des 2er-Komplements der B-Farbkomponente, wenn das höchstwertige Bit der B-Farbkomponente den Wert 0 hat;

(a3) Eingeben der digitalisierten R-, G- und B-Komponenten in die Adresseneingänge der Farbtabelleneinrichtung (1), um eine Bezugnahme zu bewirken entsprechend dem R-in-Y-Transformationskomponentenwert, entsprechend dem G-in-Y-Transformationskomponentenwert, entsprechend dem B-in-Y-Transformationskomponentenwert, entsprechend dem R-in-Cb-Transformationskomponentenwert, entsprechend dem G-in-Cb-Transformationskomponentenwert, entsprechend dem B-in-Cb-Transformationskomponentenwert, entsprechend dem R-in-Cr-Transformationskomponentenwert, entsprechend dem G-in-Cr-Transformationskomponentenwert und entsprechend dem B-in-Cr-Transformationskomponentenwert;

(a4) Umkehren der Polaritäten des betreffenden R-in-Y-Transformationskomponentenwerts, des entsprechenden R-in-Cb-Transformationskomponentenwerts und des entsprechenden R-in-Cr-Transformationskomponentenwerts, wenn das höchstwertige Bit der R-Farbkomponente den Wert 0 hat, Umkehren der Polaritäten des entsprechenden G-in-Y-Transformationskomponentenwerts, des entsprechenden G-in-Cb-Transformationskomponentenwerts und des entsprechenden G-in-Cr-Transformationskomponentenwerts, wenn das höchstwertige Bit der G-Farbkomponente den Wert 0 hat, und Umkehren der Polaritäten des entsprechenden B-in-Y-Transformationskomponentenwerts, des entsprechenden B-in-CB-Transformationskomponentenwerts und des entsprechenden B-in-Cr-Transformationskomponentenwerts, wenn das höchstwertige Bit der B-Farbkomponente den Wert 0 hat;

(a5) Addieren des entsprechenden R-in-Y-Transformationskomponentenwerts, des entsprechenden G-in-Y-Transformationskomponentenwerts und des entsprechenden B-in-Y-Transformationskomponentenwerts, um die digitalisierte Y-Komponente zu gewinnen;

(a6) Addieren des entsprechenden R-in-Cb-Transformationskomponentenwerts, des entsprechenden G-in-Cb-Transformationskomponentenwerts und des entsprechenden B-in-Cb-Transformationskomponentenwerts, um die digitalisierte Cb-Komponente zu gewinnen; und

(a7) Addieren des entsprechenden R-in-Cr-Transforrnationskomponentenwerts, des entsprechenden G-in-Cr-Transformationskomponentenwerts und des entsprechenden B-in-Cr-Transformationskomponentenwerts, um die digitalisierte Cr-Komponente zu gewinnen.

2. Verfahren nach Anspruch 1, **dadurch gekennzeichnet,** daß die RGB-Farbkomponenten und die YCbCr-Farbkomponenten jeweils eine 8-Bit-Komponente sind, und die Menge von Umwandlungen, die in dem Schritt (a1) verwendet wird, lautet:

$$\begin{vmatrix} Y \\ Cb \\ Cr \end{vmatrix} = \begin{vmatrix} 0.229 & 0.587 & 0.114 \\ -0.173 & -0.338 & 0.511 \\ 0.511 & -0.428 & -0.083 \end{vmatrix} \begin{vmatrix} R-128 \\ G-128 \\ B-128 \end{vmatrix} + \begin{vmatrix} 128 \\ 128 \\ 128 \end{vmatrix}.$$

3. Verfahren nach Anspruch 1, **dadurch gekennzeichnet,** daß die Schritte (a5), (a6) und (a7) gleichzeitig durchgeführt werden.

4. Verfahren nach Anspruch 1, weiterhin **gekennzeichnet durch** folgende Schritte:

(B) Beim Umwandeln der YCbCr-Farbkomponenten in die RGB-Farbkomponenten:

(b1) Bereitstellen der Farbtabelleneinrichtung (1) mit digitalisierten Transformationskomponentenwerten entsprechend einer Y-in-R-Komponente, einer Cb-in-R-Komponente, einer Cr-in-R-Komponente, einer Y-in-G-Komponente, einer Cb-in-G-Komponente, einer Cr-in-G-Komponente, einer Y-in-B-Komponente, einer Cb-in-B-Komponente und einer Cr-in-B-Komponente basierend auf einer Menge von Umwandlungen aus individuellen digitalisierten Y-, Cb- und Cr-Komponenten, wobei der Transformationskomponentenwert entsprechend der Y-in-R-Komponente, der Y-in-G-Komponente, der Y-in-B-Komponente, der Cb-in-R-Komponente, der Cb-in-G-Komponente, der Cb-in-B-Komponente, der Cr-in-R-Komponente, der Cr-in-G-Komponente und der Cr-in-B-Komponente das erste bis neunte Segment (11-19) in der genannten Reihenfolge belegen;

(b2) Eingeben der digitalisierten Y-, Cb- und Cr-Komponenten in die Adresseneingänge der Farbtabelleneinrichtung (1), um eine Bezugnahme zu erreichen entsprechend dem Y-in-R-Transformationskomponentenwert, entsprechend dem Cb-in-R-Transformationskomponentenwert, entsprechend dem Cr-in-R-Transformationskomponentenwert, entsprechend dem Y-in-G-Transformationskomponentenwert, entsprechend dem Cb-in-G-Transformationskomponentenwert, entsprechend dem Cr-in-G-Transformationskomponentenwert, entsprechend dem Y-in-B-Transformationskomponentenwert, entsprechend dem Cb-in-B-Transformationskomponentenwert und entsprechend dem Cr-in-B-Transformationskomponentenwert;

(b3) Addieren des entsprechenden Y-in-R-Transformationskomponentenwerts, des entsprechenden Cb-in-R-Transformationskomponentenwerts und des entsprechenden Cr-in-R-Transformationskomponentenwerts, um die digitalisierte R-Komponente zu gewinnen;

(b4) Addieren des entsprechenden Y-in-G-Transformationskomponentenwerts, des entsprechenden Cb-in-G-Transformationskomponentenwerts und des entsprechenden Cr-in-G-Transformationskomponentenwerts, um die digitalisierte G-Komponente zu gewinnen; und

(b5) Addieren des entsprechenden Y-in-B-Transformationskomponentenwerts, des entsprechenden Cb-in-B-Transformationskomponentenwerts und des entsprechenden Cr-in-B-Transformationskomponentenwerts, um die digitalisierte B-Komponente zu gewinnen.

5. Verfahren nach Anspruch 4, **dadurch gekennzeichnet,** daß die Schritte (b3), (b4) und (b5) gleichzeitig durchgeführt werden.

6. Verfahren nach Anspruch 3, **dadurch gekennzeichnet,** daß die Menge von Umwandlungen, die in dem Schritt (b1) verwendet werden, lautet:

$$
\begin{vmatrix} R \\ G \\ B \end{vmatrix} = \begin{vmatrix} 1 & -0.001 & 1.370 \\ 1 & -0.336 & -0.698 \\ 1 & 1.733 & 0.001 \end{vmatrix} \begin{vmatrix} Y \\ Cb \\ Cr \end{vmatrix} + \begin{vmatrix} -175 \\ 132 \\ -222 \end{vmatrix}.
$$

7. Verfahren nach Anspruch 4, **dadurch gekennzeichnet,** daß vor dem Schritt (b2) ein Schritt des Erzeugens des 2er-Komplements der Y-Farbkomponente durchgeführt wird, wenn das höchstwertige Bit der Y-Farbkomponente den Wert 0 hat, ein Schritt des Erzeugens des 2er-Komplements der Cb-Farbkomponente durchgeführt wird, wenn das höchstwertige Bit der Cb-Farbkomponente den Wert 0 hat und ein Schritt des Erzeugens des 2er-Komplements der Cr-Farbkomponente erfolgt, wenn das höchstwertige Bit der Cr-Farbkomponente den Wert 0 hat, und vor den Schritten (b3), (b4) und (b5) ein Schritt des Umkehrens der Polaritäten des entsprechenden Y-in-R-Transformationskomponentenwerts, des entsprechenden Y-in-G-Transformationskomponentenwerts und des entsprechenden Y-in-B-Transformationskomponentenwerts erfolgt, wenn das höchstwertige Bit der Y-Farbkomponente den Wert 0 hat, ein Schritt des Umkehrens der Polaritäten des entsprechenden Cb-in-R-Transformationskomponentenwerts, des entsprechenden Cb-in-G-Transformationskomponentenwerts und des entsprechenden Cb-in-B-Transformationskomponentenwerts erfolgt, wenn das höchstwertige Bit der Cb-Farbkomponente den Wert 0 hat, und ein Schritt des Umkehrens der Polaritäten des entsprechenden Cr-in-R-Transformationskomponentenwerts, des entsprechenden Cr-in-G-Transformationskomponentenwerts und des entsprechenden Cr-in-B-Transformationskomponentenwerts erfolgt, wenn das höchstwertige Bit der Cr-Farbkomponente den Wert 0 hat.

8. Verfahren nach Anspruch 7, **dadurch gekennzeichnet,** daß jede der RGB-Farbkomponenten und der YcbCr-Farbkomponenten eine 8-Bit-Komponente ist, und die Menge der Umwandlungen, die im Schritt (b1) verwendet wird, lautet:

$$\begin{vmatrix} R \\ G \\ B \end{vmatrix} = \begin{vmatrix} 1 & -0.001 & 1.370 \\ 1 & -0.336 & -0.698 \\ 1 & 1.733 & 0.001 \end{vmatrix} \begin{vmatrix} Y & -128 \\ Cb-128 \\ Cr-128 \end{vmatrix} + \begin{vmatrix} 128 \\ 128 \\ 128 \end{vmatrix}.$$

9. Vorrichtung zum Durchführen des Verfahrens nach Anspruch 1, **gekennzeichnet durch**:

eine Farbtabelleneinrichtung (1) zum Speichern von digitalisierten Transformationskomponentenwerten entsprechend einer R-in-Y-Komponente, einer G-in-Y-Komponente, einer B-in-Y-Komponente, einer R-in-Cb-Komponente, einer G-in-Cb-Komponente, einer B-in-Cb-Komponente, einer R-in-Cr-Komponente, einer G-in-Cr-Komponente, und einer B-in-Cr-Komponente, basierend auf einer Menge von Umwandlungen aus individuellen digitalisierten R-, G- und B-Komponenten, wobei die Farbtabelleneinrichtung (1) mehrere Adresseneingänge enthält und ein erstes bis neuntes Segment (11-19) beinhaltet, wobei die Transformationskomponentenwerte entsprechend der R-in-Y-Komponente, der R-in-Cb-Komponente, der R-in-Cr-Komponente, der G-in-Y-Komponente, der G-in-Cb-Komponente, der G-in-Cr-Komponente, der B-in-Y-Komponente, der B-in-CB-Komponente und der B-in-Cr-Komponente das erste bis neunte Segment (11-19) in dieser Reihenfolge belegen, und die Tabelleneinrichtung (1) außerdem eine Einrichtung (101, 102, 103) aufweist, um die digitalisierten R-, G- und B-omponenten zum Adressieren der Adresseneingänge der Tabelleneinrichtung (1) zu empfangen;

eine erste Addiereinrichtung zum Erzeugen eines Ausgangssignals entsprechend der Summe eines Ausgangssignals des ersten Segments (11) der Tabelleneinrichtung (1), eines Ausgangssignals des vierten Segments (14) der Tabelleneinrichtung (1) und eines Ausgangssignals des vierten Segments (17) der Tabelleneinrichtung (1), um die digitalisierte Y-Komponente zu gewinnen;

eine zweite Addiereinrichtung zum Erzeugen eines Ausgangssignals entsprechend der Summe einer Ausgangsgröße des zweiten Segments (12) der Tabelleneinrichtung (1), eine Ausgangsgröße des fünften Segments (15) der Tabelleneinrichtung (1) und einer Ausgangsgröße des achten Segments (18) der Tabelleneinrichtung (1), um die digitalisierte Cb-Komponente zu gewinnen;

eine dritte Addiereinrichtung zum Erzeugen einer Ausgangsgröße entsprechend der Summe einer Ausgangsgröße des dritten Segments (13) der Tabelleneinrichtung (1), einer Ausgangsgröße des sechsten Segments (16) der Tabelleneinrichtung (1) und einer Ausgangsgröße des neunten Segments (19) der Tabelleneinrichtung (1), um die digitalisierte Cr-Komponente zu gewinnen;

eine erste Komplementeinrichtung (21), die an die Adresseneingänge der Tabelleneinrichtung (1) gekoppelt ist, wobei die erste Komplementeinrichtung (22) die digitalisierte R-Farbkomponente empfängt und das 2er-Komplement der R-Farbkomponente erzeugt, wenn das höchstwertige Bit der R-Farbkomponente den Wert 0 hat;

eine zweite Komplementeinrichtung (22), die an die Adresseneingänge der Tabelleneinrichtung (1) gekoppelt ist, wobei die zweite Komplementeinrichtung (22) die digitalisierte G-Farbkomponente empfängt und das 2er-Komplement der G-Farbkomponente erzeugt, wenn das höchstwertige Bit der G-Farbkomponente den Wert 0 hat;

eine dritte Komplementeinrichtung (23), die an die Adresseneingänge der Tabelleneinrichtung (1) gekoppelt ist, wobei die dritte Komplementeinrichtung die digitalisierte B-Farbkomponente empfängt und das 2erKomplement der B-Farbkomponente erzeugt, wenn das höchstwertige Bit der B-Farbkomponente den Wert 0 hat;

eine erste Polaritätssteuereinrichtung (31), welche das erste Segment (11) der Tabelleneinrichtung (1) und die erste Addiereinrichtung verbindet, um die Polarität des entsprechenden R-in-Y-Transformationskomponentenwerts aus dem ersten Segment (11) der Tabelleneinrichtung (1) umzukehren, wenn das höchstwertige Bit der R-Farbkomponente den Wert 0 hat;

eine zweite Polaritätssteuereinrichtung (32), welche das zweite Segment (12) der Tabelleneinrichtung (1) und die zweite Addiereinrichtung verbindet, um die Polarität des entsprechenden R-in-Cb-Transformationskomponentenwerts aus dem ersten Segment (12) der Tabelleneinrichtung (1) umzukehren, wenn das höchstwertige Bit der R-Farbkomponente den Wert 0 hat;

eine dritte Polaritätssteuereinrichtung (33), die das dritte Segment (13) der Tabelleneinrichtung (1) mit der dritten Addiereinrichtung verbindet, um die Polarität des entsprechenden R-in-Cr-Transformationskomponentenwerts aus dem dritten Segment (13) der Tabelleneinrichtung (1) umzukehren, wenn das höchstwertige Bit der R-Farbkomponente den Wert 0 hat;

eine vierte Polaritätssteuereinrichtung (34), die das vierte Segment (14) der Tabelleneinrichtung (1) mit der ersten Addiereinrichtung verbindet, um die Polarität des entsprechenden G-in-Y-Transformationskomponentenwerts aus dem vierten Segment (14) der Tabelleneinrichtung (1) umzukehren, wenn das höchstwertige Bit der G-Farbkomponente den Wert 0 hat;

eine fünfte Polaritätssteuereinrichtung (35), die das fünfte Segment (15) der Tabelleneinrichtung (1) mit der zweiten Addiereinrichtung verbindet, um die Polarität des entsprechenden G-in-Cb-Transformationskomponentenwerts aus dem fünften Segment (15) der Tabelleneinrichtung (1) umzukehren, wenn das höchstwertige Bit der G-Farbkomponente den Wert 0 hat;

eine sechste Polaritätssteuereinrichtung (36), die das sechste Segment (16) der Tabelleneinrichtung (1) mit der dritten Addiereinrichtung verbindet, um die Polarität des entsprechenden G-in-Cr-Transformationskomponentenwerts aus dem sechsten Segment (16) der Tabelleneinrichtung (1) umzukehren, wenn das höchstwertige Bit der G-Farbkomponente den Wert 0 hat;

eine siebte Polaritätssteuereinrichtung (37), die das siebte Segment (17) der Tabelleneinrichtung (1) mit der ersten Addiereinrichtung verbindet, um die Polarität des entsprechenden B-in-Y-Transformationskomponentenwerts aus dem siebten Segment (17) der Tabelleneinrichtung (1) umzukehren, wenn das höchstwertige Bit der B-Farbkomponente den Wert 0 hat;

eine achte Polaritätssteuereinrichtung (38), die das achte Segment (18) der Tabelleneinrichtung (1) mit der zweiten Addiereinrichtung verbindet, um die Polarität des entsprechenden B-in-Cb-Transformationskomponentenwerts aus dem achten Segment (18) der Tabelleneinrichtung (1) umzukehren, wenn das höchstwertige Bit der B-Farbkomponente den Wert 0 hat; und

eine neunte Polaritätssteuereinrichtung (39), die das neunte Segment (19) der Tabelleneinrichtung (1) mit der dritten Addiereinrichtung verbindet, um die Polarität des entsprechenden B-in-Cr-Transformationskomponentenwerts aus dem neunten Segment (19) der Tabelleneinrichtung (1) umzukehren, wenn das höchstwertige Bit der B-Farbkomponente den Wert 0 hat.

10. Vorrichtung nach Anspruch 9, **dadurch gekennzeichnet,** daß die RGB-Farbkomponenten und die YCbCr-Farbkomponenten jeweils 8-Bit-Komponenten sind und die Menge von Umwandlungen lautet:

$$\begin{vmatrix} Y \\ Cb \\ Cr \end{vmatrix} = \begin{vmatrix} 0.229 & 0.587 & 0.114 \\ -0.173 & -0.338 & 0.511 \\ 0.511 & -0.428 & -0.083 \end{vmatrix} \begin{vmatrix} R-128 \\ G-128 \\ B-128 \end{vmatrix} + \begin{vmatrix} 128 \\ 128 \\ 128 \end{vmatrix}.$$

11. Verfahren zum Umwandeln digitalisierter YCbCr-Farbkomponenten in digitalisierte RGB-Farbkomponenten, **gekennzeichnet durch** die Schritte:

(i) Bereitstellen einer Farbtabelleneinrichtung (1A), die mehrere Adresseneingänge aufweist und enthält: ein erstes Segment (11A), ausgestattet mit einem digitalisierten Transformationskomponentenwert entsprechend einer Cb-in-G-Komponente, ein zweites Segment (12A), ausgestattet mit einem digitalisierten Transformationswert entsprechend einer Cb-in-B-Komponente, ein drittes Segment (13A), ausgestattet mit einem digitalisierten Transformationskomponentenwert entsprechend einer Cr-in-R-Komponente, und ein viertes Segment (14A), ausgestattet mit einem digitalisierten Transformationskomponentenwert entsprechend einer Cr-in-G-Komponente;

(ii) Erzeugen des 2er-Komplements der Cb-Farbkomponente, wenn das höchstwertige Bit der Cb-Farbkomponente den Wert 0 hat, und Erzeugen des 2er-Komplements der Cr-Farbkomponente, wenn das höchstwertige Bit der Cr-Farbkomponente den Wert 0 hat;

(iii) Eingeben der digitalisierten Cb- und Cr-Komponenten in die Adresseneingänge der Farbtabelleneinrichtung (1A), um eine Bezugnahme herzustellen entsprechend dem Cb-in-G-Transformationskomponentenwert, entsprechend dem Cb-in-B-Transformationskomponentenwert, entsprechend dem Cr-in-R-Transformationskomponentenwert und entsprechend dem Cr-in-G-Transformationskomponentenwert;

(iv) Umkehren der Polaritäten des entsprechenden Cb-in-G-Transformationskomponentenwerts und des entsprechenden Cb-in-B-Transformationskomponentenwerts, wenn das höchstwertige Bit der Cb-Farbkomponente den Wert 0 hat, und einen Schritt des Umkehrens der Polaritäten des entsprechenden Cr-in-R-Transformationskomponentenwerts und des entsprechenden Cr-in-G-Transformationskomponentenwerts, wenn das höchstwertige Bit der Cr-Farbkomponente den Wert 0 hat;

(v) Addieren der Y-Komponente und des entsprechenden Cr-in-R-Transformationskomponentenwerts, um die digitalisierte R-Komponente zu erhalten;

(vi) Addieren der Y-Komponente, des entsprechenden Cb-in-G-Transformationskomponentenwerts und des entsprechenden Cr-in-G-Transformationskomponentenwerts, um die digitalisierte G-Komponente zu erhalten; und

(vii)Addieren der Y-Komponente und des entsprechenden Cb-in-B-Transformationskomponentenwerts, um die digitalisierte B-Komponente zu erhalten.

**12.** Verfahren nach Anspruch 11, **dadurch gekennzeichnet,** daß jede der RGB-Farbkomponenten und YCbCr-Farbkomponenten eine 8-Bit-Komponente ist, und die Menge der Umwandlungen lautet:

$$\begin{vmatrix} R \\ G \\ B \end{vmatrix} = \begin{vmatrix} 1 & -0.001 & 1.370 \\ 1 & -0.336 & -0.698 \\ 1 & 1.733 & 0.001 \end{vmatrix} \begin{vmatrix} Y-128 \\ Cb-128 \\ Cr-128 \end{vmatrix} + \begin{vmatrix} 128 \\ 128 \\ 128 \end{vmatrix}.$$

**13.** Verfahren nach Anspruch 11, **dadurch gekennzeichnet,** daß die Schritte (v), (vi) und (vii) gleichzeitig durchgeführt werden.

**14.** Vorrichtung zum Durchführen des Umwandlungsverfahrens nach Anspruch 11, **gekennzeichnet durch**:

eine Farbtabelleneinrichtung (1A), die mehrere Adresseneingänge aufweist und enthält: ein erstes Segment (11A), ausgestattet mit einem digitalisierten Transformationskomponentenwert entsprechend einer Cb-in-G-Komponente, ein zweites Segment (12A), ausgestattet mit einem digitalisierten Transformationskomponentenwert entsprechend einer Cb-in-B-Komponente, ein drittes Segment (13A), ausgestattet mit einem digitalisierten Transformationskomponentenwert entsprechend einer Cr-in-R-Komponente, und ein viertes Segment (14A), ausgestattet mit einem digitalisierten Transformationskomponentenwert entsprechend einer Cr-in-G-Komponente, wobei die Cb-in-G-, die Cb-in-B-, die Cr-in-R- und die Cr-in-G-Transformationskomponentenwerte auf einer Menge von Umwandlungen aus individuellen digitalisierten Y-, Cb- und Cr-Komponenten basieren, wobei die Tabelleneinrichtung (1A) außerdem eine Einrichtung (102A, 103A) zum Empfangen der digitalisierten Cb- und Cr-Komponenten und zum Adressieren der Adresseneingänge der Tabelleneinrichtungen aufweist;

eine erste Addiereinrichtung zum Erzeugen einer Ausgangsgröße entsprechend der Summe aus der Y-Komponente und einem Ausgangssignal des dritten Segments (13A) der Tabelleneinrichtung (1A), um die digitalisierte R-Komponente zu erhalten;

eine zweite Addiereinrichtung zum Erzeugen einer Ausgangsgröße entsprechend der Summe der Y-Komponente, einer Ausgangsgröße des ersten Segments (11A) der Tabelleneinrichtung (1A) und einer Ausgangsgröße des vierten Segments (14A) der Tabelleneinrichtung (1A), um die digitalisierte G-Komponente zu erhalten;

eine dritte Addiereinrichtung zum Erzeugen einer Ausgangsgröße entsprechend der Summe der Y-Komponente und eines Ausgangssignals des zweiten Segments (12A) der Tabelleneinrichtung (1A), um die digitalisierte B-Komponente zu erhalten;

eine erste Komplementeinrichtung (22A), die an die Adresseneingänge der Tabelleneinrichtung (1A) gekoppelt ist und die digitalisierte Cb-Farbkomponente empfängt und das 2er-Komplement der Cb-Farbkomponente erzeugt, wenn das höchstwertige Bit der Cb-Farbkomponente den Wert 0 hat;

eine zweite Komplementeinrichtung (23A), die an die Adresseneingänge der Tabelleneinrichtung (1A) gekoppelt ist, die die digitalisierte Cr-Farbkomponente empfängt, und die das 2er-Komplement der Cr-Farbkomponente erzeugt, wenn das höchstwertige Bit der Cr-Farbkomponente den Wert 0 hat;

eine erste Polaritätssteuereinrichtung (31A), die das erste Segment (11A) der Tabelleneinrichtung (1A) mit der zweiten Addiereinrichtung verbindet, um die Polarität des entsprechenden Cb-in-G-Transformationskomponentenwerts aus dem ersten Segment (11A) der Tabelleneinrichtung (1A) umzukehren, wenn das höchstwertige Bit der Cb-Farbkomponente den Wert 0 hat;

eine zweite Polaritätssteuereinrichtung (32A), die das zweite Segment (12A) der Tabelleneinrichtung (1A) mit der dritten Addiereinrichtung verbindet, um die Polarität des entsprechenden Cb-in-B-Transformationskomponentenwerts aus dem zweiten Segment (12A) der Tabelleneinrichtung (1A) umzukehren, wenn das höchstwertige Bit der Cb-Farbkomponente den Wert 0 hat;

eine dritte Polaritätssteuereinrichtung (33A), die das dritte Segment (13A) der Tabelleneinrichtung (1A) mit der ersten Addiereinrichtung verbindet, um die Polarität des entsprechenden Cr-in-R-Transformationskomponentenwerts aus dem dritten Segment (13A) der Tabelleneinrichtung (1A) umzukehren, wenn das höchstwertige Bit der Cr-Farbkomponente den Wert 0 hat; und

eine vierte Polaritätssteuereinrichtung (34A), die das vierte Segment (14A) der Tabelleneinrichtung (1A) mit der zweiten Addiereinrichtung verbindet, um die Polarität des entsprechenden Cr-in-G-Transformationskomponentenwerts aus dem vierten Segment (14A) der Tabelleneinrichtung (1A) umzukehren, wenn das höchstwertige Bit der Cr-Farbkomponente den Wert 0 hat.

15. Vorrichtung nach Anspruch 14, **dadurch gekennzeichnet,** daß jede der YCbCr-Farbkomponenten und der RGB-Farbkomponenten eine 8-Bit-Komponente ist und die Menge der Umwandlungen lautet:

$$
\begin{vmatrix} R \\ G \\ B \end{vmatrix} = \begin{vmatrix} 1 & -0.001 & 1.370 \\ 1 & -0.336 & -0.698 \\ 1 & 1.733 & 0.001 \end{vmatrix} \begin{vmatrix} Y & -128 \\ Cb-128 \\ Cr-128 \end{vmatrix} + \begin{vmatrix} 128 \\ 128 \\ 128 \end{vmatrix}.
$$

**Revendications**

1. Procédé pour effectuer une conversion d'univers des couleurs entre composantes de couleur RGB numérisées et composantes de couleur YCbCr numérisées, ledit procédé étant caractérisé en ce qu'il comporte les étapes consistant à :

(A) lors de la conversion desdites composantes de couleur RGB en composantes de couleur YCbCr,

(a1) fournir à des moyens programmables (1) formant table de correspondance des couleurs les valeurs de composantes de transformation numérisées correspondant à une composante R-dans-Y, une composante G-dans-Y, une composante B-dans-Y, une composante R-dans-Cb, une composante G-dans-Cb, une composante B-dans-Cb, une composante R-dans-Cr, une composante G-dans-Cr, et une composante B-dans-Cr sur la base d'un ensemble de conversions à partir de composantes R, G et B numérisées individuelles, lesdits moyens programmables (1) formant table de correspondance des couleurs comportant une pluralité d'entrées d'adresse et comportant des premier à neuvième segments (11 à 19), lesdites valeurs des composantes de transformation correspondant à ladite composante R-dans-Y, à ladite composante R-dans-Cb, à ladite composante R-dans-Cr, à ladite composante G-dans-Y, à ladite composante G-dans-Cb, à ladite composante G-dans-Cr, à ladite composante B-dans-Y, à ladite composante B-dans-Cb, et à ladite composante B-dans-Cr occupant lesdits premier à neuvième segments, respectivement,

(a2) générer le complément à 2 de ladite composante de couleur R lorsque le bit de poids le plus fort de la composante de couleur R est égal à 0, générer le complément à 2 de ladite composante de couleur G lorsque le bit de poids le plus fort de la composante de couleur G est égal à 0 et générer le complément à 2 de ladite composante de couleur B lorsque le bit de poids le plus fort de la composante de couleur B est égal à 0,

(a3) entrer lesdites composantes R, G et B numérisées sur lesdites entrées d'adresse desdits moyens (1) formant table de correspondance des couleurs pour faire référence à la valeur de la composante de transformation correspondant à ladite composante R-dans-Y, à la valeur de la composante de transformation correspondant à ladite composante G-dans-Y, à la valeur de la composante de transformation correspondant à ladite composante B-dans-Y, à la valeur de la composante de transformation correspondant à ladite composante R-dans-Cb, à la valeur de la composante de transformation correspondant à ladite composante G-dans-Cb, à la valeur de la composante de transformation correspondant à ladite composante B-dans-Cb, à la valeur de la composante de transformation correspondant à ladite composante R-dans-Cr, à la valeur de la composante de transformation correspondant à ladite composante G-dans-Cr et à la valeur de la composante de transformation correspondant à ladite composante B-dans-Cr,

(a4) inverser les polarités de la valeur de la composante de transformation correspondant à ladite composante R-dans-Y, de la valeur de la composante de transformation correspondant à ladite composante R-dans-Cb et de la valeur de la composante de transformation correspondant à ladite composante R-dans-Cr lorsque ledit bit de poids le plus fort de ladite composante de couleur R est égal à 0, inverser les polarités de la valeur de la composante de transformation correspondant à ladite composante G-dans-Y, de la valeur de la composante de transformation correspondant à ladite composante G-dans-Cb et de la valeur de la composante de transformation correspondant à ladite composante G-dans-Cr lorsque ledit bit de poids le plus fort de ladite composante de couleur G est égal à 0, et inverser les polarités de la valeur de la composante de transformation correspondant à ladite composante B-dans-Y, de la valeur de la composante de transformation correspondant à ladite composante B-dans-Cb et de la valeur de la composante de transformation correspondant à ladite composante B-dans-Cr lorsque ledit bit de poids le plus fort de ladite composante de couleur B est égal à 0,

(a5) additionner la valeur de la composante de transformation correspondant à ladite composante R-dans-Y, la valeur de la composante de transformation correspondant à ladite composante G-dans-Y et la valeur de la composante de transformation correspondant à ladite composante B-dans-Y pour obtenir la composante Y numérisée,

(a6) additionner la valeur de la composante de transformation correspondant à ladite composante R-dans-Cb, la valeur de la composante de transformation correspondant à ladite composante G-dans-Cb et la valeur de la composante de transformation correspondant à ladite composante B-dans-Cb pour obtenir la composante Cb numérisée, et

(a7) additionner la valeur de la composante de transformation correspondant à ladite composante R-dans-Cr, la valeur de la composante de transformation correspondant à ladite composante G-dans-Cr et la valeur de la composante de transformation correspondant à ladite composante B-dans-Cr pour obtenir la composante Cr numérisée.

2.  Procédé selon la revendication 1, caractérisé en ce que chacune des composantes de couleur RGB et des composantes de couleur YCbCr est une composante de 8 bits et ledit ensemble de conversions utilisé lors de ladite étape (a1) est

$$
\begin{vmatrix} Y \\ Cb \\ Cr \end{vmatrix} = \begin{vmatrix} 0,229 & 0,587 & 0,114 \\ -0,173 & -0,338 & 0,511 \\ 0,511 & -0,428 & -0,083 \end{vmatrix} \begin{vmatrix} R-128 \\ G-128 \\ B-128 \end{vmatrix} + \begin{vmatrix} 128 \\ 128 \\ 128 \end{vmatrix}
$$

3.  Procédé selon la revendication 1, caractérisé en ce que lesdites étapes (a5), (a6) et (a7) sont exécutées simultanément.

4. Procédé selon la revendication 1, caractérisé en outre en ce qu'il comporte les étapes consistant à :

(B) lors de la conversion desdites composantes de couleur YCbCr en composantes de couleur RGB,

(b1) fournir auxdits moyens (1) formant table de correspondance des couleurs les valeurs de composantes de transformation numérisées correspondant à une composante Y-dans-R, une composante Cb-dans-R, une composante Cr-dans-R, une composante Y-dans-G, une composante Cb-dans-G, une composante Cr-dans-G, une composante Y-dans-B, une composante Cb-dans-B, et une composante Cr-dans-B sur la base d'un ensemble de conversions à partir de composantes Y, Cb, Cr numérisées individuelles, lesdites valeurs des composantes de transformation correspondant à ladite composante Y-dans-R, à ladite composante Y-dans-G, à ladite composante Y-dans-B, à ladite composante Cb-dans-R, à ladite composante Cb-dans-G, à ladite composante Cb-dans-B, à ladite composante Cr-dans-R, à ladite composante Cr-dans-G et à ladite composante Cr-dans-B occupant lesdits premier à neuvième segments (11-19), respectivement,
(b2) entrer lesdites composantes Y, Cb et Cr numérisées sur lesdites entrées d'adresse desdits moyens (1) formant table de correspondance des couleurs pour faire référence à la valeur de la composante de transformation correspondant à ladite composante Y-dans-R, à la valeur de la composante de transformation correspondant à ladite composante Cb-dans-R, à la valeur de la composante de transformation correspondant à ladite composante Cr-dans-R, à la valeur de la composante de transformation correspondant à ladite composante Y-dans-G, à la valeur de la composante de transformation correspondant à ladite composante Cb-dans-G, à la valeur de la composante de transformation correspondant à ladite composante Cr-dans-G, à la valeur de la composante de transformation correspondant à ladite composante Y-dans-B, à la valeur de la composante de transformation correspondant à ladite composante Cb-dans-B et à la valeur de la composante de transformation correspondant à ladite composante Cr-dans-B,
(b3) additionner la valeur de la composante de transformation correspondant à ladite composante Y-dans-R, la valeur de la composante de transformation correspondant à ladite composante Cb-dans-R et la valeur de la composante de transformation correspondant à ladite composante Cr-dans-R pour obtenir la composante R numérisée,
(b4) additionner la valeur de la composante de transformation correspondant à ladite composante Y-dans-G, la valeur de la composante de transformation correspondant à ladite composante Cb-dans-G et la valeur de la composante de transformation correspondant à ladite composante Cr-dans-G pour obtenir la composante G numérisée, et
(b5) additionner la valeur de la composante de transformation correspondant à ladite composante Y-dans-B, la valeur de la composante de transformation correspondant à ladite composante Cb-dans-B et la valeur de la composante de transformation correspondant à ladite composante Cr-dans-B pour obtenir la composante B numérisée.

5. Procédé selon la revendication 4, caractérisé en ce que lesdites étapes (b3), (b4) et (b5) sont exécutées simultanément.

6. Procédé selon la revendication 3, caractérisé en ce que ledit ensemble de conversions utilisé lors de ladite étape (b1) est

$$\begin{vmatrix} R \\ G \\ B \end{vmatrix} = \begin{vmatrix} 1 & -0,001 & 1,370 \\ 1 & -0,336 & -0,698 \\ 1 & 1,733 & 0,001 \end{vmatrix} \begin{vmatrix} Y \\ Cb \\ Cr \end{vmatrix} + \begin{vmatrix} -175 \\ 132 \\ -222 \end{vmatrix}$$

7. Procédé selon la revendication 4, caractérisé en ce qu'il comporte en outre, avant l'étape (b2), une étape consistant à générer le complément à 2 de ladite composante de couleur Y lorsque le bit de poids le plus fort de la composante de couleur Y est égal à 0, une étape consistant à générer le complément à 2 de ladite composante de couleur Cb lorsque le bit de poids le plus fort de la composante de couleur Cb est égal à 0 et une étape consistant à générer le complément à 2 de ladite composante de couleur Cr lorsque le bit de poids le plus fort de la composante de couleur Cr est égal à 0, et, avant les étapes (b3), (b4) et (b5), une étape consistant à inverser les polarités de la valeur de la composante de transformation correspondant à ladite composante Y-dans-R, de la valeur de la composante de transformation correspondant à ladite composante Y-dans-G et de la valeur de la composante de transformation correspondant à ladite composante Y-dans-B lorsque ledit bit de poids le plus fort de ladite composante de couleur Y est égal à 0, une étape consistant à inverser les polarités de la valeur de la composante de transformation correspondant à ladite composante Cb-dans-R, de la valeur de la composante de transformation correspondant à ladite composante Cb-dans-G et de la valeur de la composante de transformation correspondant à ladite composante Cb-dans-B lorsque ledit bit de poids le plus fort de ladite composante de couleur Cb est égal à 0, et une étape consistant à inverser les polarités de la valeur de la composante de transformation correspondant à ladite composante Cr-dans-R, de la valeur de la composante de transformation correspondant à ladite composante Cr-dans-G et de la valeur de la composante de transformation correspondant à ladite composante Cr-dans-B lorsque ledit bit de poids le plus fort de ladite composante de couleur Cr est égal à 0.

8. Procédé selon la revendication 7, caractérisé en ce que chacune des composantes de couleur RGB et des composantes de couleur YCbCr est une composante de 8 bits et ledit ensemble de conversions utilisé lors de ladite étape (b1) est

$$
\begin{vmatrix} R \\ G \\ B \end{vmatrix} = \begin{vmatrix} 1 & -0{,}001 & 1{,}370 \\ 1 & -0{,}336 & -0{,}698 \\ 1 & 1{,}733 & 0{,}001 \end{vmatrix} \begin{vmatrix} Y - 128 \\ Cb - 128 \\ Cr - 128 \end{vmatrix} + \begin{vmatrix} 128 \\ 128 \\ 128 \end{vmatrix}
$$

9. Dispositif pour mettre en oeuvre le procédé de conversion selon la revendication 1, caractérisé en ce que qu'il comporte

des moyens (1) formant table de correspondance des couleurs pour mémoriser les valeurs de composantes de transformation numérisées correspondant à une composante R-dans-Y, une composante G-dans-Y, une composante B-dans-Y, une composante R-dans-Cb, une composante G-dans-Cb, une composante B-dans-Cb, une composante R-dans-Cr, une composante G-dans-Cr et une composante B-dans-Cr sur la base d'un ensemble de conversions à partir de composantes R, G et b numérisées individuelles, lesdits moyens (1) formant table de correspondance des couleurs comportant une pluralité d'entrées d'adresse et comportant des premier à neuvième segments (11-19), lesdites valeurs des composantes de transformation correspondant à ladite composante R-dans-Y, à ladite composante R-dans-Cb, à ladite composante R-dans-Cr, à ladite composante G-dans-Y, à ladite composante G-dans-Cb, à ladite composante G-dans-Cr, à ladite composante B-dans-Y, à ladite composante B-dans-Cb et à ladite composante B-dans-Cr occupant lesdits premier à neuvième segments (11-19), respectivement, lesdits moyens (1) formant table de correspondance comportant en outre des moyens (101, 102, 103) pour recevoir les composantes R, G et B numérisées de manière à adresser lesdites entrées d'adresse desdits moyens (1) formant table de correspondance,
des premiers moyens additionneurs pour générer une sortie correspondant à la somme d'une sortie dudit premier segment (11) desdits moyens (1) formant table de correspondance, d'une sortie dudit quatrième segment (14) desdits moyens (1) formant table de correspondance et d'une sortie dudit septième segment (17) desdits moyens (1) formant table de correspondance de manière à obtenir la composante Y numérisée,
des deuxièmes moyens additionneurs pour générer une sortie correspondant à la somme d'une sortie dudit deuxième segment (12) desdits moyens (1) formant table de correspondance, d'une sortie dudit cinquième segment (15) desdits moyens (1) formant table de correspondance et d'une sortie dudit huitième segment (18) desdits moyens (1) formant table de correspondance de manière à obtenir la composante Cb numérisée,
des troisièmes moyens additionneurs pour générer une sortie correspondant à la somme d'une sortie dudit troisième segment (13) desdits moyens (1) formant table de correspondance, d'une sortie dudit sixième segment (16) desdits moyens (1) formant table de correspondance et d'une sortie dudit neuvième segment (19) desdits moyens (1) formant table de correspondance de manière à obtenir la composante Cr numérisée,
des premiers moyens de complémentation (21) reliés auxdites entrées d'adresse desdits moyens (1) formant table de correspondance, lesdits premiers moyens de complémentation (22) recevant ladite composante de couleur R numérisée et générant le complément à 2 de ladite composante de couleur R lorsque le bit de poids le plus fort de la composante de couleur R est égal à 0,
des deuxièmes moyens de complémentation (22) reliés auxdites entrées d'adresse desdits moyens (1) formant table de correspondance, lesdits deuxièmes moyens de complémentation (22) recevant ladite composante de couleur G numérisée et générant le complément à 2 de ladite composante de couleur G lorsque le bit de poids le plus fort de la composante de couleur G est égal à 0,
des troisièmes moyens de complémentation (23) reliés auxdites entrées d'adresse desdits moyens (1) formant table de correspondance, lesdits troisièmes moyens de complémentation (23) recevant ladite composante de couleur B numérisée et générant le complément à 2 de ladite composante de couleur B lorsque le bit de poids le plus fort de la composante de couleur B est égal à 0,

des premiers moyens de commande de polarité (31) reliant entre eux ledit premier segment (11) desdits moyens (1) formant table de correspondance et lesdits premiers moyens additionneurs pour inverser la polarité de la valeur de la composante de transformation correspondant à ladite composante R-dans-Y délivrée par ledit premier segment (11) desdits moyens (1) formant table de correspondance lorsque ledit bit de poids le plus fort de ladite composante de couleur R est égal à 0,

des deuxièmes moyens de commande de polarité (32) reliant entre eux ledit deuxième segment (12) desdits moyens (1) formant table de correspondance et lesdits deuxièmes moyens additionneurs pour inverser la polarité de la valeur de la composante de transformation correspondant à ladite composante R-dans-Cb délivrée par ledit deuxième segment (12) desdits moyens (1) formant table de correspondance lorsque ledit bit de poids le plus fort de ladite composante de couleur R est égal à 0,

des troisièmes moyens de commande de polarité (33) reliant entre eux ledit troisième segment (13) desdits moyens (1) formant table de correspondance et lesdits troisièmes moyens additionneurs pour inverser la polarité de la valeur de la composante de transformation correspondant à ladite composante R-dans-Cr délivrée par ledit troisième segment (13) desdits moyens (1) formant table de correspondance lorsque ledit bit de poids le plus fort de ladite composante de couleur R est égal à 0,

des quatrièmes moyens de commande de polarité (34) reliant entre eux ledit quatrième segment (14) desdits moyens (1) formant table de correspondance et lesdits premiers moyens additionneurs pour inverser la polarité de la valeur de la composante de transformation correspondant à ladite composante G-dans-Y délivrée par ledit quatrième segment (14) desdits moyens (1) formant table de correspondance lorsque ledit bit de poids le plus fort de ladite composante de couleur G est égal à 0,

des cinquièmes moyens de commande de polarité (35) reliant entre eux ledit cinquième segment (15) desdits moyens (1) formant table de correspondance et lesdits deuxièmes moyens additionneurs pour inverser la polarité de la valeur de la composante de transformation correspondant à ladite composante G-dans-Cb délivrée par ledit cinquième segment (15) desdits moyens (1) formant table de correspondance lorsque ledit bit de poids le plus fort de ladite composante de couleur G est égal à 0,

des sixièmes moyens de commande de polarité (36) reliant entre eux ledit sixième segment (16) desdits moyens (1) formant table de correspondance et lesdits troisièmes moyens additionneurs pour inverser la polarité de la valeur de la composante de transformation correspondant à ladite composante G-dans-Cr délivrée par ledit sixième segment (16) desdits moyens (1) formant table de correspondance lorsque ledit bit de poids le plus fort de ladite composante de couleur G est égal à 0,

des septièmes moyens de commande de polarité (37) reliant entre eux ledit septième segment (17) desdits moyens (1) formant table de correspondance et lesdits premiers moyens additionneurs pour inverser la polarité de la valeur de la composante de transformation correspondant à ladite composante B-dans-Y délivrée par ledit septième segment (17) desdits moyens (1) formant table de correspondance lorsque ledit bit de poids le plus fort de ladite composante de couleur B est égal à 0,

des huitièmes moyens de commande de polarité (38) reliant entre eux ledit huitième segment (18) desdits moyens (1) formant table de correspondance et lesdits deuxièmes moyens additionneurs pour inverser la polarité de la valeur de la composante de transformation correspondant à ladite composante B-dans-Cb délivrée par ledit huitième segment (18) desdits moyens (1) formant table de correspondance lorsque ledit bit de poids le plus fort de ladite composante de couleur B est égal à 0, et

des neuvièmes moyens de commande de polarité (39) reliant entre eux ledit neuvième segment (19) desdits moyens (1) formant table de correspondance et lesdits troisièmes moyens additionneurs pour inverser la polarité de la valeur de la composante de transformation correspondant à ladite composante B-dans-Cr délivrée par ledit neuvième segment (19) desdits moyens (1) formant table de correspondance lorsque ledit bit de poids le plus fort de ladite composante de couleur B est égal à 0.

**10.** Dispositif selon la revendication 9, caractérisé en ce que lesdites composantes de couleur RGB et lesdites composantes de couleur YCbCr sont des composantes de 8 bits, ledit ensemble de conversions étant

$$
\begin{vmatrix} Y \\ Cb \\ Cr \end{vmatrix} = \begin{vmatrix} 0,229 & 0,587 & 0,114 \\ -0,173 & -0,338 & 0,511 \\ 0,511 & -0,428 & -0,083 \end{vmatrix} \begin{vmatrix} R-128 \\ G-128 \\ B-128 \end{vmatrix} + \begin{vmatrix} 128 \\ 128 \\ 128 \end{vmatrix}
$$

**11.** Procédé pour convertir des composantes de couleur YCbCr numérisées en composantes de couleur RGB numérisées, ledit procédé étant caractérisé en ce qu'il comporte les étapes consistant à :

(i) fournir des moyens (1A) formant table de correspondance des couleurs qui comportent une pluralité d'entrées d'adresse et qui comportent un premier segment (11A) comportant une valeur de composante de transformation numérisée correspondant à une composante Cb-dans-G, un deuxième segment (12A) comportant une valeur de composante de transformation numérisée correspondant à une composante Cb-dans-B, un troisième segment (13A) comportant une valeur de composante de transformation numérisée correspondant à une composante Cr-dans-R, et un quatrième segment (14A) comportant une valeur de composante de transformation numérisée correspondant à une composante Cr-dans-G,

(ii) générer le complément à 2 de ladite composante de couleur Cb lorsque le bit de poids le plus fort de la composante de couleur Cb est égal à 0, et générer le complément à 2 de ladite composante de couleur Cr lorsque le bit de poids le plus fort de la composante de couleur Cr est égal à 0,

(iii) entrer lesdites composantes Cb et Cr numérisées sur lesdites entrées d'adresse desdits moyens (1A) formant table de correspondance des couleurs pour faire référence à la valeur de la composante de transformation correspondant à ladite composante Cb-dans-G, à la valeur de la composante de transformation correspondant à ladite composante Cb-dans-B, à la valeur de la composante de transformation correspondant à ladite composante Cr-dans-R et à la valeur de la composante de transformation correspondant à ladite composante Cr-dans-G,

(iv) inverser les polarités de la valeur de la composante de transformation correspondant à ladite composante Cb-dans-G et de la valeur de la composante de transformation correspondant à ladite composante Cb-dans-B lorsque ledit bit de poids le plus fort de ladite composante de couleur Cb est égal à 0, et inverser les polarités de la valeur de la composante de transformation correspondant à ladite composante Cr-dans-R et de la valeur de la composante de transformation correspondant à ladite composante Cr-dans-G lorsque ledit bit de poids le plus fort de ladite composante de couleur Cr est égal à 0,

(v) additionner ladite composante Y et la valeur de la composante de transformation correspondant à ladite composante Cr-dans-R pour obtenir la composante R numérisée,

(vi) additionner ladite composante Y, la valeur de la composante de transformation correspondant à ladite composante Cb-dans-G et la valeur de la composante de transformation correspondant à ladite composante Cr-dans-G pour obtenir la composante G numérisée, et

(vii) additionner ladite composante Y et la valeur de la composante de transformation correspondant à ladite composante Cb-dans-B pour obtenir la composante B numérisée.

**12.** Procédé selon la revendication 11, caractérisé en ce que chacune des composantes de couleur RGB et des composantes de couleur YCbCr est une composante de 8 bits, et ledit ensemble de conversions est

$$
\begin{vmatrix} R \\ G \\ B \end{vmatrix} = \begin{vmatrix} 1 & -0,001 & 1,370 \\ 1 & -0,336 & -0,698 \\ 1 & 1,733 & 0,001 \end{vmatrix} \begin{vmatrix} Y - 128 \\ Cb - 128 \\ Cr - 128 \end{vmatrix} + \begin{vmatrix} 128 \\ 128 \\ 128 \end{vmatrix}
$$

**13.** Procédé selon la revendication 11, caractérisé en ce que lesdites étapes (v), (vi) et (vii) sont exécutées simultanément.

**14.** Dispositif pour mettre en oeuvre le procédé de conversion selon la revendication 11, caractérisé en ce qu'il comporte :

des moyens (1A) formant table de correspondance des couleurs qui comportent une pluralité d'entrées d'adresse et qui comportent un premier segment (11A) comportant une valeur de composante de transformation numérisée correspondant à une composante Cb-dans-G, un deuxième segment (12A) comportant une valeur de composante de transformation numérisée correspondant à une composante Cb-dans-B, un troisième segment (13A) comportant une valeur de composante de transformation numérisée correspondant à une composante Cr-dans-R, et un quatrième segment (14A) comportant une valeur de composante de transformation numérisée correspondant à une composante Cr-dans-G, lesdites valeurs des composantes de transformation Cb-dans-G, Cb-dans-B, Cr-dans-R et Cr-dans-G étant basées sur un ensemble de conversions à partir de composantes Y, Cb et Cr numérisées individuelles, lesdits moyens (1A) formant table de correspondance comportant en outre des moyens (102A, 103A) pour recevoir les composantes Cb et Cr numérisées et pour adresser lesdites entrées d'adresse desdits moyens formant table de correspondance,

des premiers moyens additionneurs pour générer une sortie correspondant à la somme de ladite composante Y et d'une sortie dudit troisième segment (13A) desdits moyens (1A) formant table de correspondance de manière à obtenir la composante R numérisée,

des deuxièmes moyens additionneurs pour générer une sortie correspondant à la somme de ladite composante Y, d'une sortie dudit premier segment (11A) desdits moyens (1A) formant table de correspondance et d'une sortie dudit quatrième segment (14A) desdits moyens (1A) formant table de correspondance de manière à obtenir la composante G numérisée,

des troisièmes moyens additionneurs pour générer une sortie correspondant à la somme de ladite composante Y et d'une sortie dudit deuxième segment (12A) des moyens (1A) formant table de correspondance de manière à obtenir la composante B numérisée,

des premiers moyens de complémentation (22A) reliés auxdites entrées d'adresse desdits moyens (1A) formant table de correspondance, lesdits premiers moyens de complémentation recevant ladite composante de couleur Cb numérisée et générant le complément à 2 de ladite composante de couleur Cb lorsque le bit de poids le plus fort de la composante de couleur Cb est égal à 0,

des seconds moyens de complémentation (23A) reliés auxdites entrées d'adresse desdits moyens (1A) formant table de correspondance, lesdits seconds moyens de complémentation recevant ladite composante de couleur Cr numérisée et générant le complément à 2 de ladite composante de couleur Cr lorsque le bit de poids le plus fort de la composante de couleur Cr est égal à 0,

des premiers moyens de commande de polarité (31A) reliant entre eux ledit premier segment (11A) desdits moyens (1A) formant table de correspondance et lesdits deuxièmes moyens additionneurs pour inverser la polarité de la valeur de la composante de transformation correspondant à ladite composante Cb-dans-G délivrée par ledit premier segment (11A) desdits moyens (1A) formant table de correspondance lorsque ledit bit de poids le plus fort de ladite composante de couleur Cb est égal à 0,

des deuxièmes moyens de commande de polarité (32A) reliant entre eux ledit deuxième segment (12A) desdits moyens (1A) formant table de correspondance et lesdits troisièmes moyens additionneurs pour inverser la polarité de la valeur de la composante de transformation correspondant à ladite composante Cb-dans-B délivrée par ledit deuxième segment (12A) desdits moyens (1A) formant table de correspondance lorsque ledit bit de poids le plus fort de ladite composante de couleur Cb est égal à 0,

des troisièmes moyens de commande de polarité (33A) reliant entre eux ledit troisième segment (13A) desdits moyens (1A) formant table de correspondance et lesdits premiers moyens additionneurs pour inverser la polarité de la valeur de la composante de transformation correspondant à ladite composante Cr-dans-R délivrée par ledit troisième segment (13A) desdits moyens (1A) formant table de correspondance lorsque ledit bit de poids le plus fort de ladite composante de couleur Cr est égal à 0, et

des quatrièmes moyens de commande de polarité (34A) reliant entre eux ledit quatrième segment (14A) desdits moyens (1A) formant table de correspondance et lesdits deuxièmes moyens additionneurs pour inverser la polarité de la valeur de la composante de transformation correspondant à ladite composante Cr-dans-G délivrée par ledit quatrième segment (14A) desdits moyens (1A) formant table de correspondance lorsque ledit bit de poids le plus fort de ladite composante de couleur Cr est égal à 0.

**15.** Dispositif selon la revendication 14, caractérisé en ce que chacune des composantes de couleur YCbCr et des composantes de couleur RGB est une composante de 8 bits et ledit ensemble de conversions est

$$\begin{vmatrix} R \\ G \\ B \end{vmatrix} = \begin{vmatrix} 1 & -0,001 & 1,370 \\ 1 & -0,336 & -0,698 \\ 1 & 1,733 & 0,001 \end{vmatrix} \begin{vmatrix} Y - 128 \\ Cb - 128 \\ Cr - 128 \end{vmatrix} + \begin{vmatrix} 128 \\ 128 \\ 128 \end{vmatrix}$$

FIG.1A

FIG.1B

FIG. 1C

PIm6,PIm5,...,PIm0 ——→
PIm7 ——→

**FIRST COMPLEMENT MEANS** 21

——→ **INPUT MEANS** 101

——→ Am0,Am1,.....,Am127

## FIG.2

OUTPUT OF THE FIRST SEGMENT 11 OF THE LOOKUP TABLE MEANS 1 ——→

PIm7 ——→

**COMPLEMENT MEANS** 310

Am0 ——→ **DETECTOR** 312

31 **OUTPUT SHADING CIRCUIT** 311 ——→ Cnm(PIm-128)

## FIG.3

EP 0 680 223 B1

FIG.4

EP 0 680 223 B1

FIG.5

EP 0 680 223 B1

EP 0 680 223 B1

| PIm VALUE | SYMMETRICAL ADDRESS FOR CODING TABLE | POLARITY OF Cnm (PIm-128) VERSUS Cnm $\|PIm-128\|$ | REMARK |
|---|---|---|---|
| 0 | 0 | − | |
| 1 | 127 | − | |
| 2 | 126 | − | |
| 3 | 125 | − | |
| . | . | . | Cnm (PIm-128) = |
| . | . | . | −Cnm $\|PIm-128\|$ |
| . | . | . | |
| 126 | 2 | − | |
| 127 | 1 | − | |
| 128 | 0 | 0 | Cnm (PIm-128) = 0 |
| 129 | 1 | + | |
| 130 | 2 | + | |
| . | . | . | |
| . | . | . | Cnm (PIm-128) = |
| . | . | . | Cnm $\|PIm-128\|$ |
| . | . | . | |
| 253 | 125 | + | |
| 254 | 126 | + | |
| 255 | 127 | + | |

FIG.6

| SELECTOR | SELECTED COMPONENT |
|----------|-------------------|
| 01 | PI1 |
| 10 | PI2 |
| 11 | PI3 |
| 00 | FLOATING |

FIG.7